# NEW EUROPEAN PATENT SPECIFICATION

(11) **EP 1 247 325 B2**
(45) Date of publication and mention of the opposition decision: **02.06.2010**
(45) Mention of the grant of the patent: 05.10.2005
(21) Application number: 00990909.4
(22) Date of filing: 09.11.2000
(51) Int. Cl.: H02K 55/04, H02K 3/04

(54) **HTS SUPERCONDUCTING ROTATING MACHINE**
SUPRALEITENDE ROTIERENDE ELEKTRISCHE MASCHINE MIT HOCHTEMPERATURSUPRALEITERN
MACHINE ROTATIVE SUPRACONDUCTRICE A SUPRACONDUCTEURS HAUTE TEMPERATURE

(30) Priority: 11.01.2000 US 266319 P; 11.01.2000 US 481484; 04.08.2000 US 632776
(43) Date of publication of application: 09.10.2002
(73) Proprietor: AMERICAN SUPERCONDUCTOR CORPORATION, Westborough, MA 01581-1727 (US)
(72) Inventor: HOWARD, Raymond, T., Franklin, MA 02038 (US); KALSI, Swarn, S., Shrewsbury, MA 01545 (US); SNITCHLER, Gregory, L., Shrewsbury, MA 01545 (US); GAMBLE, Bruce, B., Wellesley, MA 02482 (US); SAND, William, T., Cumberland, RI 02864 (US); WINN, Peter, M., Shrewsbury, MA 01545 (US); Voccio, John P., West Newton, MA 02465 (US)
(74) Representative: Wright, Howard Hugh Burnby
(86) International application number: PCT/US2000/031011
(87) International publication number: WO 2001/052393

(56) References cited:
- WO-A-98/34244
- AT-B- 258 404
- DE- - 1 815 904
- DE- - 2 442 277
- DE-A- 4 008 912
- GB-A- 986 323
- GB-A- 1905 -01 526
- JP-A- 59 089 569
- JP-A2- 55 026 653
- US-A- 3 473 341
- US-A- 3 745 389
- US-A- 3 816 780
- US-A- 3 991 333
- US-A- 4 554 730
- US-A- 4 885 494
- US-A- 5 513 498
- US-A- 5 581 220
- US-A- 5 777 420
- US-A- 5 848 532
- SIEMENS AG: 'SF-Generatoren' ABSCHLUSSBERICHT BMFT 03E-8296-A vol. 2, 01 January 1983 - 31 December 1991, MÜLHEIM / ERLANGEN 15.08.1992,
- C. ALBRECHT: 'Superconductivity in energy technologies' VDI-VERLAG GMBH 1990 page 110-123
- GERD FEHMEL/HORST FLACHMANN / OTTO MAI: 'Elektrische Maschinen' VOGEL BUCHVERLAG page 220-221
- T.BÖDENFELD, H.SEQUENZ: 'Elektrische Maschinen' SPRINGER-VERLAG WIEN 1962 page 180-183
- 'Superconducting Turbogenerator Development Program' IEEE TRANSACTIONS ON MAGNETICS / MAG-17 1981 page 890-893
- K.YAMAGUCHI, N.MAKI, R.SHIOBARA: 'Rotor Design of a 1000 MW Superconducting Generator' IEEE TRANSACTIONS ON ENERGY CONVERSION page 244-249
- CHOW ET AL.,: 'Design & Fabrication of Racetrack Coil Accelerator Magnets' EPAC 1998 6TH EUROPEAN PARTICLE ACCELERATOR CONFERENCE /AUGUST 1998,
- 'Electrical Technology' HUGHES, LONGMANS, GREEN & CO. LTD., 1963 page 501
- J.A DEMKO ET AL.,: 'Cryogenic Multi-Layer Insulation' COLD FACTS: NEWSLETTER OF CRYOGENIC SOCIETY OF AMERICA, INC.
- MARTIN J. HEATHCOTE: 'A Practical Technology of the Power transformer' J & P TRANSFORMER BOOK ISSN 075061158 page 142
- 'Power Applications of Superconductivity in Japan & Germany' INTERNATIONAL TECHNOLOGY RESEARCH INSTITUTE MARYLAND BALTIMORE / SEPTEMBER 1997,

## Description

This invention arose in part out of research pursuant to Contract No. N00014-99-C-0296 awarded by the Office of Naval Research.

### TECHNICAL FIELD

This invention relates to a superconducting rotating machine according to the preamble of claim 1 which is known from US-A-5,777,420.

### BACKGROUND

Superconducting air core, synchronous electric machines have been under development since the early 1960s. The use of superconducting windings in these machines has resulted in a significant increase in the magneto motive forces generated by the windings and increased flux densities in the machines. These early superconducting machines included field windings wound with low temperature superconductors (LTS), originally NbZr or NbTi, and later with Nb3Sn. The field windings were cooled with liquid helium from a stationary liquifier. The liquid helium was transferred into the rotor of the machine and then vaporized to use both latent and sensible heat of the fluid to cool the windings. This approach proved viable for only very large synchronous motors and generators (e.g., larger than 500 MW). With the advent of high temperature superconductors (HTS) in the 1980s, investigations ensued to determine the feasibility of HTS windings in superconducting synchronous machines.

### SUMMARY

First and second inventions feature a superconducting rotating machine as defined in claim 1 and claim 2 respectively, having a relatively compact design, while still providing a relatively high output power. In effect, the construction provides a superconducting rotating machine possessing an increased power density characteristic.

The superconducting machine is of the type having a stator assembly and a rotor assembly that rotates within the stator assembly and is spaced from the stator assembly by a gap. This arrangement can be used, for example, to produce a superconducting motor or generator.

In one aspect of the invention, the superconducting rotating machine includes at least one HTS superconducting winding assembly which, in operation, generates a magnetic flux linking the stator assembly and rotor assembly, a refrigeration system for cooling the at least one superconducting winding of the rotor assembly and the superconducting rotating machine has a torque density of approximately 75 N·m/Kg or more at 500 RPM or less, the torque density being equal to the motor shaft torque divided by the motor mass. The high torque density at low speeds is advantageous in situations where a high-speed motor would require a gearbox to reduce output speed. Gearboxes are noisy, large and expensive. For example, the present invention could be utilized to drive a ship propeller without using a gearbox, thereby saving valuable ship space and reducing overall noise.

Gap shear stress is an effective measure of the torque density of a machine. It relates machine performance to the surface area in the gap between the rotor assembly and stator assembly. In particular, gap shear stress is numerically equivalent to the machine torque divided by the area and radius of the gap. If the rotor experiences a surface shear stress equal to the gap shear stress, a torque equal to the design torque would be transmitted to the shaft of the machine. A gap shear stress characteristic in a range between 103,421 N/m² (15 lbs/in² (psi)) and 689,476 N/m² (100 psi) while achieving the desired 75 N·m/Kg or more at 500 RPM or less torque density characteristic.
Embodiments of this aspect of the invention may include one or more of the following features. In certain embodiments, the machine has a torque density of approximately 150 N·m/Kg or more at 300 RPM or less and a gap shear stress characteristic in a range between 206,843 N/m² (30 lbs/in2 (psi)) and 689,476 N/m² (100 psi).

The superconducting winding assembly includes a superconducting coil having a superconductor tape wound about and disposed along an axis of the winding assembly to provide a plurality of concentric turns defining an opening. Each turn of the superconductor tape has a broad surface maintained substantially parallel to the axis of the winding assembly.
In certain embodiments, the superconducting tape is wound in a racetrack configuration defining a pair of opposing arcuate end sections and a pair of substantially straight side sections. The superconductor tape includes a multi-filament composite superconductor having individual superconducting filaments that extend the length of the multi-filament composite conductor and are surrounded by a matrix-forming material.

The superconductor tape includes an anisotropic high temperature superconductor, for example, Bi2Sr2Ca2Cu3O. Alternatively, the anisotropic high temperature superconductor is a member of the rare-earth-copper-oxide family.

In certain embodiments, the superconducting winding assembly includes internal support members adjacent to and alternating with the superconducting windings to help alleviate the large bending stresses that occur within the superconducting winding assembly. For example, 1,016 mm (40 mil) thick stainless steel can be alternated with the superconducting windings. The internal support members and superconducting windings form a laminate that gives mechanical strength to the system and prevents the non-circular superconducting windings from pushing themselves apart. For example, the racetrack configuration superconductor winding will attempt to become a circular winding, pushing the substantially straight side sections away from each other. The internal support members will also be coated with a thermally conductive coating that will provide a heat conduction path to cryogenic cooling tubes located within the rotor body. For example, copper could be used to coat the internal support members.

The rotor assembly of the superconducting rotating machine is enclosed in a vacuum chamber, which isolates the cryogenically cooled superconducting windings from the surrounding components. A shaft is mounted through the rotor assembly, spaced from the rotor assembly by a gap. The shaft is mounted using tangential buckle assemblies, which allow for the transfer of rotational forces between the rotor assembly and the shaft. The shaft is also mounted using axial buckle assemblies, in conjunction with the tangential assemblies. The axial buckle assemblies secure the rotor assembly axially to the shaft. Both the tangential buckle assemblies and the axial buckle assemblies utilize thermally isolating bands to thermally isolate the rotor assembly from the shaft. The shaft would act as a huge heat sink if the cryogenically cooled superconducting windings were not thermally isolated from the warm shaft. The thermally isolating bands can be manufactured from any material with a high tensile strength and low thermal conductivity. In certain embodiments, the thermally isolating bands are from a reinforced epoxy (e.g., a para-aramid and epoxy mixture). Para-aramid is sold by E.I. duPont de Numours, Wilmington, DE, under the trademark Kevlar®.

The stator assembly is manufactured utilizing diamond-shaped stator coils. The stator assembly may also include individual stator coil cooling. Each coil is wrapped with an electrically insulating material and a cooling conduit for receiving coolant from an outside source is mounted to a side of the stator coil. The electrically insulating material allows the cooling conduit, which is at ground potential, to rest against the stator coil. The cooling conduit and electrically insulated stator coil are wrapped with a thermally conductive material, which facilitates cooling from the sides of the stator coil not adjacent the cooling conduit and thereby reduces the temperature gradient in the electrically insulating material.

Utilizing the external cooling conduit and electrically insulating it from the stator coil allows fresh water to be used instead of de-ionized water and a smaller, more dense stator coil is possible because one does not have to depend on air cooling the stator assembly. In certain embodiments, two cooling conduits can be mounted on opposing parallel faces to give better cooling characteristics to the system. Also, multiple passageway conduits may be used.

In certain embodiments, the electrically insulating material may vary in thickness proportional to the voltages experienced throughout the stator assemblies. Each diamond-shaped stator coil experiences varying voltage, dependent on its placement within the stator. The stator coils closest to the line voltage will require the thickest insulation. The insulation on the stator coils electrically located midway between the ends of the phase will require the thinnest insulation due to the voltage drops in preceding coils. Therefore, the thickness of the electrically insulating material decreases in steps between a maximum value at the ends of the phase and a minimum value approximately half the maximum thickness at coils electrically located midway between the ends of the phase. Varying the thickness of the electrically insulating material will help facilitate cooling, since thicker insulation will not be used where it is not needed. Similar principles but a different numerical value for minimum insulation thickness will be required for phases containing an odd number of coils.

By proper matching of the pairs of coils in a two layer winding with different insulation thicknesses, and by varying the size of wire in the coils in each pair for similar temperature rise, substantially decreased temperature rise or increased resistance to voltage breakdown may be obtained.

The superconducting rotating machine includes a cryogenic cooling system for cooling the superconducting windings. The cryogenic cooling system includes a plurality of cryogenically cooled surfaces and a cryogenic fluid transport device within the cryogenic environment that moves a cryogenic fluid between the cooled surfaces and the superconducting windings in the rotor assembly. The cryogenic fluid is transported through a closed loop system that is in fluid communication with the cryogenically cooled surfaces and in thermal communication with the rotor assembly. A rotary coupling allows the cryogenically cooled surfaces and the cryogenic fluid transport device to remain stationary while the closed loop system within the rotor assembly rotates.

In one embodiment, the cryogenic fluid transport device is a cryogenically adaptable fan. The advantage of using a cryogenically adaptable fan is that the cryogenic fluid will not experience a phase change and will not require warming the fluid to ambient temperatures. Also, a cryogenically adaptable fan is smaller and less expensive than adding compressors and heat exchangers, which require a phase change.

In certain embodiments, the cryogenically cooled surfaces are Gifford-McMahon registered trademark cold heads. Pulse tubes and cryogenic refrigerators are also useful as cryogenically cooled surfaces.

Other advantages and features of the invention will become apparent from the following description and the claims.

### DESCRIPTION OF DRAWINGS

Fig. 1 is a cross-sectional perspective view of a superconducting motor in accordance with the invention.
Fig. 2 is a generic cross-sectional view of the superconducting motor of Fig. 1.
Fig. 3 is a perspective view of a stator assembly of the superconducting motor of Fig. 1.
Fig. 4 is a perspective view of a single phase of stator coils of the stator assembly of Fig. 3.
Fig. 5 is a perspective view of a single phase of stator coils mounted on the support tube of the stator assembly of Fig. 3.
Fig. 6 is a cross-sectional perspective view of a stator coil section of the stator assembly of Fig. 3.
Fig. 6A is a schematic of two stator coils and an associated cooling loop.
Fig. 7 is a cross-sectional perspective view of a rotor assembly of the superconducting motor of Fig. 1.
Fig. 8 is a cross-sectional perspective view of an output shaft and vacuum chamber of the rotor assembly of Fig. 7.
Fig. 9 is a perspective view of rotor coils mounted on a rotor body of the rotor assembly of Fig. 7.
Fig. 10 is a cross-sectional view of the rotor coil stack with internal support members of the rotor coils of Fig. 9.
Fig. 11 is a perspective view of an axial buckle of the rotor assembly of Fig. 7.
Fig. 12A is a perspective view of a tangential buckle of the rotor assembly of Fig. 7.
Fig. 12B is a perspective view of the tangential buckle of Fig. 12 mounted with a spring.
Fig. 13A is a cross-sectional perspective view of the tangential buckles mounted within the rotor assembly of Fig. 7.
Fig. 13B is a cross-sectional perspective view of the axial buckles mounted within the rotor assembly of Fig. 7.
Fig. 14 is a perspective view of a cryogenic cooling system and mounting flange of the superconducting motor of Fig. 1.
Fig. 15 is a block diagram of a cryogenic cooling system of the superconducting motor of Fig. 1.
Fig. 16 is a cross-sectional perspective view of a portion of another embodiment of a rotor assembly.
Fig. 17 is a perspective view of a rotor body segment of the rotor assembly of Fig. 16.
Fig. 18 is a perspective view of a coolant manifold mounted on the segmented rotor assembly of Fig. 16.
Fig. 19 is a perspective view of another embodiment of a rotor body assembly having axial compression devices.
Fig. 20 is a perspective view of a portion of an axial compression device shown in Fig. 19.

Like reference symbols in the various drawings indicate like elements.

### DETAILED DESCRIPTION

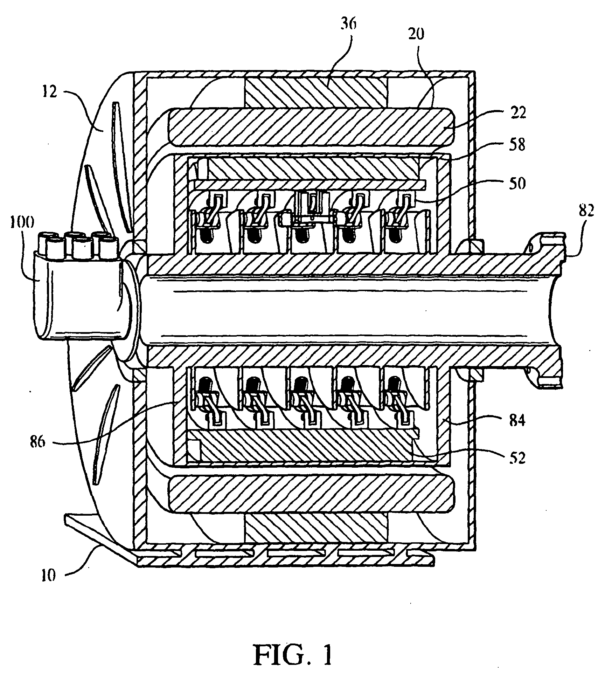

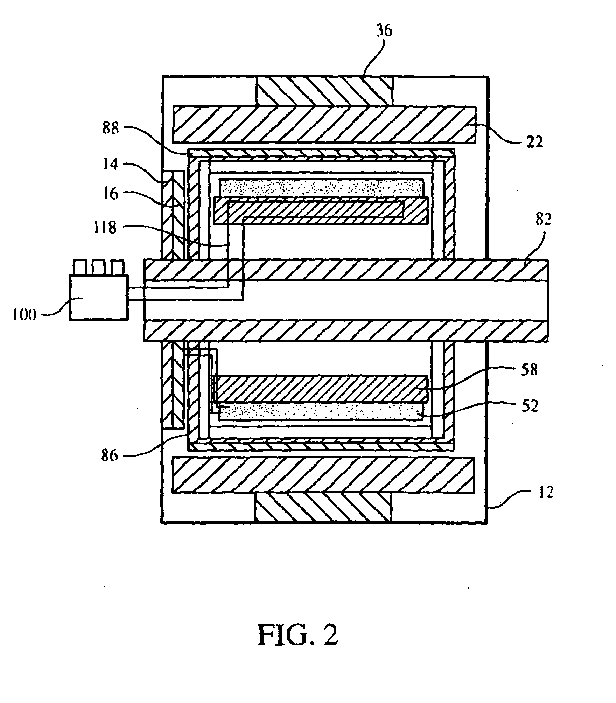

Referring to Fig. 1 and 2, a superconducting synchronous motor 10 includes a rotor assembly 50 cooled by a cryogenic cooling system 100, here a Gifford McMahon (GM) cooling system, and surrounded by a stator assembly 20. Both the stator assembly 20 and the rotor assembly 50 are mounted in a housing 12 to protect the components and any users of the superconducting motor 10. As will be described in greater detail below, each of these components and assemblies have features which contribute toward both increasing the overall performance, as well as reducing the overall size of motor 10. In particular, superconducting synchronous motor 10 can be shown to produce torque densities as high as 75 N·m/Kg or more at 500 RPM or less. Furthermore, such motors are expected to provide a greatly improved gap shear stress characteristic in a range between 103,421 N/m² (15 psi) and 689,476 N/m² (100 psi).

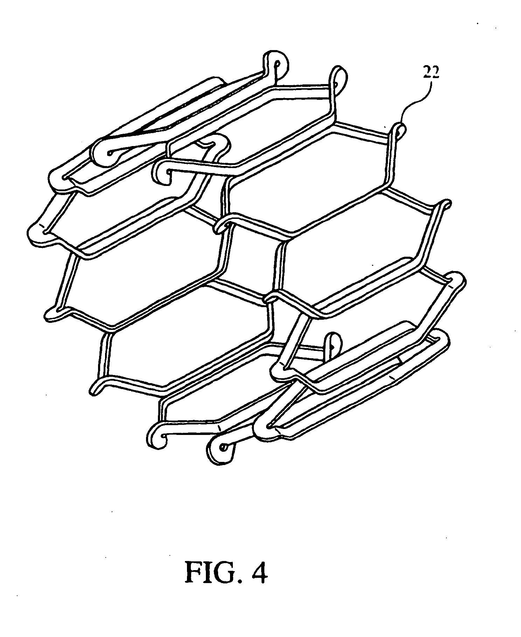

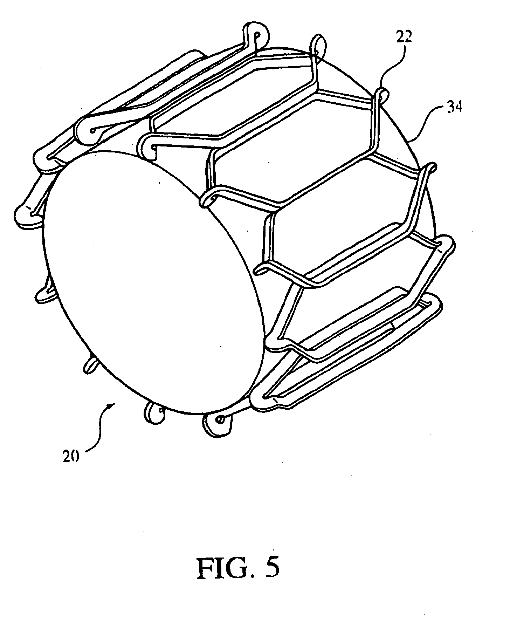

Referring to Fig. 1 and 3-5, the stator assembly 20 includes, in this embodiment, one hundred eight stator coils 22 wound around a support tube 34, and arranged in a multi-phase configuration, here a 9-phase configuration. The twelve stator coils 22 per phase provide a 12-pole arrangement. A back iron 36 is constructed by wrapping magnetic wire around the stator coils 22. The stator coils 22 are wound into a diamond pattern, with one stator coil 22 diamond representing a single pole. The stator coils 22 are arranged around the support tube 34 by overlapping sides of adjoining stator coils 22 in the same phase.

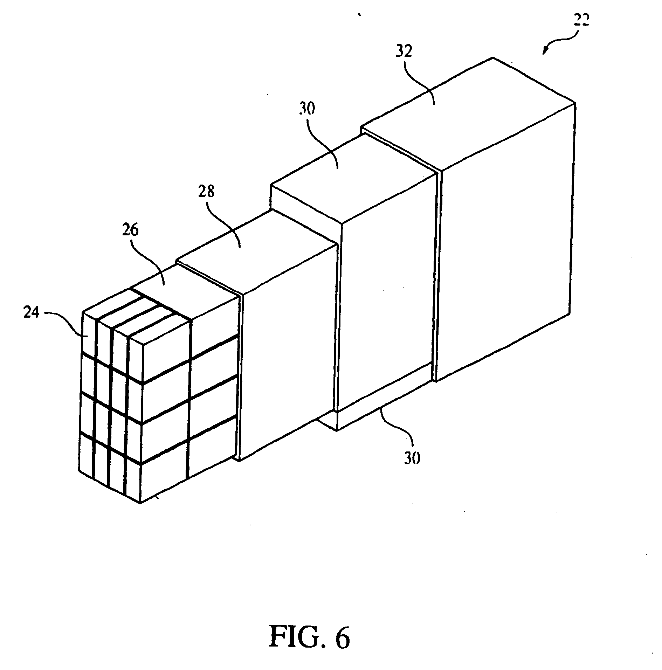

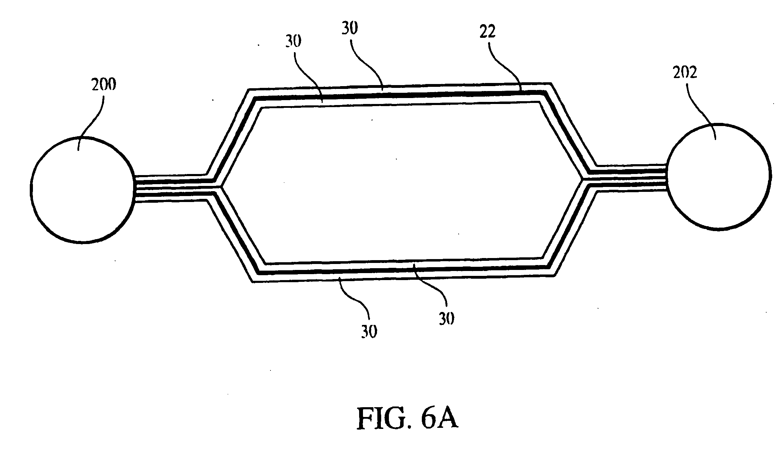

Referring to Fig. 6, cooling conduits 30 are positioned to be in thermal contact with each stator coil 22 to facilitate cooling of the stator assembly 20. Each cooling conduit 30 is constructed from a thin walled, high electrical resistivity alloy for minimizing eddy current heating. Each coolant passage of the cooling conduit 30 is distinct and electrically isolated from the adjacent coolant passage. Because the cooling conduits 30 are generally constructed from an electrically conductive material, an electrically insulating tape 28 is wrapped about the stator coil 22 to electrically insulate the stator coil 22 from surrounding components that are at ground potential, particularly the cooling conduits 30. In particular, the electrically insulating tape 28 maintains the cooling conduits 30 at ground potential, thereby permitting the use of fresh water, which contains ions. The electrically insulating tape 28 is made from a material having a thickness that can withstand operating voltages of the conductor turns 24, as well as the heat generated by the conductor turns 24. The thickness of the electrically insulating tape 28 is determined by the dielectric strength (insulating properties) of the material and operating voltage, typically between about 0,0254 to 2,54 mm (0,001 to 0,100 inches). Examples of materials for the electrically insulating tape 28 include, but are not limited to, epoxy, mica, and glass tapes.

In this embodiment, the stator coils 22 are formed of an array of multiple conductor turns 24. Each conductor turn 24 is electrically isolated from an adjacent turn by insulation 26. Insulation 26 may be formed of the same material as electrically insulating tape 28, but has a reduced thickness (e.g., 0,0254 to 0,762mm (0.001 to 0.030 inches).

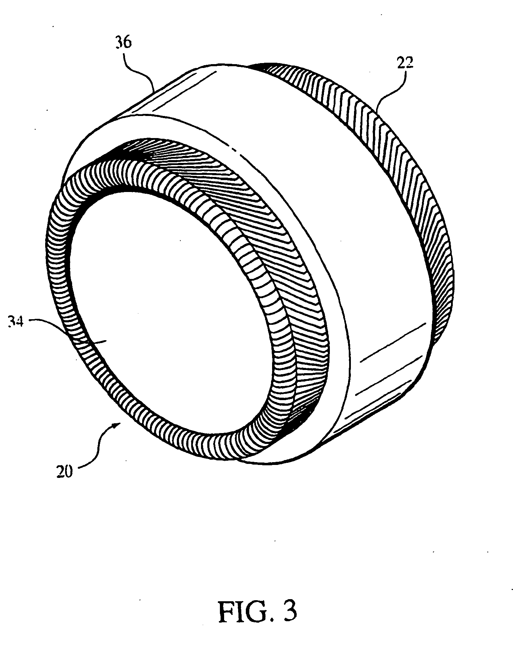

Referring to Figs. 6 and 6A, cooling conduits 30 are mounted adjacent to and in contact with the electrically insulating tape 28 surrounding each stator coil 22. Each cooling conduit 30 has a number of passages extending therethrough for receiving a coolant from a fresh water external source 200. With reference to Fig. 3, each cooling conduit 30 has an opening (not shown) at the end regions of each stator coil 22. Therefore, one hundred eight openings are in fluid communication with a manifold assembly (not shown) to allow fluid into each cooling conduit 30 from the external source 200. On the other side of the stator coils 22, one hundred eight openings are in fluid communication with a return 202. In one embodiment, the manifolds are end caps (not shown) circumferentially mounted to the front and back edge of the stator assembly 20.

A porous copper thermally conductive member 32, which has low electrical conductivity, is disposed about the stator coil 22 and cooling conduits 30 to facilitate cooling of the entire stator coil 22. In other embodiments, this could be constructed from a wire disposed about the stator coil 22. Absent the thermally conductive member 32, the stator coil 22 would only be cooled at the contact point between the cooling conduit 30 and the electrically insulating tape 28. Because of this contact point cooling, a thermal gradient would be induced through the electrically insulating material 28. This thermal gradient creates thermal stresses between the cooling conduit 30 and the electrically insulating tape 28, which can cause premature failure in the stator assembly 20 due to electrical breakdown at this interface. Additionally, with high power density embodiments, the cooling conduit 30 cannot be mounted on a wide side of the stator coil 22 due to the required high packing densities. To minimize the peak temperature, the thermally conductive member 32 is positioned around the stator coil 22 and the cooling conduit 30 to allow heat transfer from the sides of the stator coil 22 that are not in direct contact with the cooling conduit 30.

In certain embodiments, cooling of the stator assembly 20 is further enhanced by varying the thickness of the electrically insulating material 28. The electrically insulating material 28 isolating the conductor turns 24 in each diamond-shaped stator coil 22 from the grounded thermally conductive member 32 experiences varying dielectric stress dependent on the electrical location of the coil within a given phase of the stator assembly 20 with stator coils 22 connected in series. The two stator coils 22 at the end of the phase are connected directly to line voltage and their electrically insulating material 28 experiences maximum dielectric stress between conductor turn 24 and the thermally conducting member 32. The coils electrically located midway between the ends of the phase are exposed to approximately half the dielectric stress due to the voltage drops in the stator coils 22 between the end and middle of the phase. The thickness of the electrically insulating material 28 is varied in uniform steps directly proportional to the voltage variation. In one embodiment, the minimum thickness of the electrically insulating material 28 thickness is calculated by the relationship Tᵢₙₛ*(0.5 + (1/N)), where Tᵢₙₛ represents the maximum thickness of the electrically material 28 at coils connected to the line voltage and N represents the even number of stator coils 22 in each phase. The electrically insulating material 28 thickness will proportionally vary in uniform steps between the maximum thickness, Tᵢₙₛ, and the minimum thickness. Varying the thickness of the electrically insulating material 28 will help facilitate cooling, since thicker electrically insulating material 28 will not be used where it is not needed.

In another embodiment, the stator coils 22 in each phase may be arranged and connected in pairs in a two layer winding with stator coils 22 having the thinnest and thickest electrically insulating material 28 being paired. Stator coils 22 with the next thinnest and next thickest electrically insulating material 28 are then paired, this process being continued until the final two middle stator coils 22 are paired.

In certain other embodiments, the benefits of varying the thickness of the electrically insulating material 28 can be enhanced by varying the cross sectional area of each of the two stator coils 22 in the above described pairs of stator coils 22. The cross sectional area of the conducting turns 24 in the stator coil 22 with thin electrically insulating material can be decreased as higher power can be dissipated due to the decreased thermal resistance of the thin electrically insulating material 28. This makes room in the same coil pair to decrease the power dissipation in the remaining coil with thick electrically insulating material 28 by increasing the cross sectional area of its conducting turns 24. Typically winding temperature rise is reduced by 30 percent compared with the result of using conventional art with uniform insulation thickness and uniform wire cross sectional areas. Increased resistance to voltage breakdown between the conducting turns 24 and the adjacent thermally conductive member 32 can be obtained compared with conventional art by increasing the thickness of electrically insulating material 28 on each of the coils in the above coil pairs for the same higher temperature as obtained with conventional art.

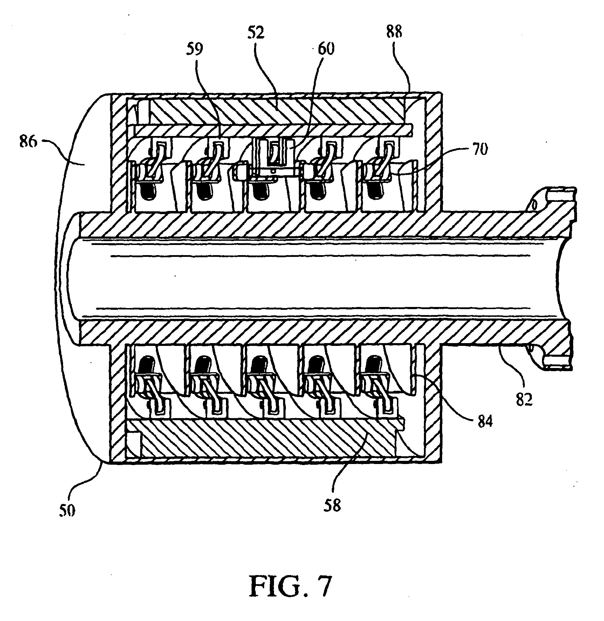

Referring to Fig. 7, the rotor assembly 50 includes a rotor body 58, onto which the superconducting rotor coils 52 are fixed, mounted onto an output shaft 82 by an array of tangential buckles 70 and axial buckles 60. As will be explained in detail below, the tangential buckles 70 and the axial buckles 60 transfer the torque and forces produced by the rotor coils 52 to the output shaft 82, while also thermally isolating the cryogenically cooled rotor body 58 from the output shaft 82. The tangential buckles 70 and axial buckles 60 are mounted between rotor body ribs 59 and output shaft plates 84, as will be described in detail below. Vacuum chamber walls 86 are integrally mounted to the output shaft 82, enclosing the rotor assembly 50 and acting as a cryostat. As will be described in detail below, a closed cryogenic cooling loop 118 (Shown in Fig. 2) is used to conduct heat from the rotor coils 52 to the cryocooler 104 where the heat can be dissipated. In particular embodiments, vacuum chamber 86 includes an outer cylindrical wall that, for reasons discussed below, serves as an electromagnetic shield 88.

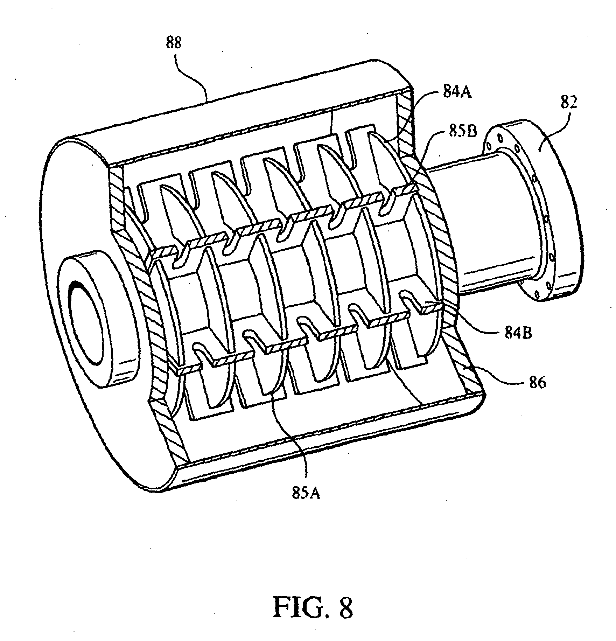

Referring to Figs. 7 and 8, the output shaft 82 includes multiple plates 84 extending radially outward from the output shaft 82 surface. The multiple plates 84 include a first set of circumferentially extending plates 84A positioned around the output shaft 82 and a second set of longitudinally extending plates 84B positioned along the output shaft 82. Walls of the plates 84 form generally rectangular pockets, here thirty in number, around the surface of the output shaft 82 into which the tangential buckles 70 and axial buckles 60 mount. The plates 84 also include radial slots. Specifically, longitudinal plates 84B include radial slots 85B in every rectangular pocket wall around the output shaft 82 formed by the longitudinal plates 84B for mounting the tangential buckles 70. Similarly, the circumferential plates 84A define radial slots 85A in every other rectangular pocket wall around the output shaft 82 formed by the circumferential plates 84A for mounting the axial buckles 60. However, the present embodiment only utilizes three axial buckles displaced within the rectangular pockets in the middle of the rectangular pocket array. That is, no radial slots 85A are found on the outer circumferential plates 84A.

Referring again to Fig. 2, as discussed above, a vacuum chamber 86 is integrally mounted to the output shaft 82 and encloses the rotor assembly 50. The vacuum chamber 86 also encloses the circumferential plates 84A and longitudinal plates 84B, and is sized to allow the rotor body 58 and rotor coils 52 to be mounted to the output shaft 82. The output shaft 82 extends beyond the vacuum chamber 86 and the plates 84 at both ends. On one end, the output shaft 82 extends to connect to an external load that the motor 10 will drive. At the other end, the output shaft 82 connects to a rotating half of a brushless exciter 16.

The brushless exciter, shown in Figure 2, includes a rotating disk 16 spaced from a stationary disk 14 (e.g., spaced 1-4 mm). Rotating disk 16 is formed of a high permeability powder or laminated material (e.g., iron) and includes a pair of concentric grooves within which a pair of coil windings is disposed. Stationary disk 14 is similarly formed of a high permeability material and includes a pair of concentric grooves within which a pair of coil windings is disposed. In essence, this arrangement provides a transformer having a primary, which rotates relative to a secondary of the transformer (or vice versa). An important feature of this particular arrangement is that the flux linkage generated by stationary disk 14 and rotating disk 16 when stationary is the same as when the rotating disk rotates. This feature advantageously allows superconducting rotor coils 52 to be charged prior to rotating disk 16 rotating (i.e., before motor 10 operates).

The rotor assembly includes an electromagnetic shield 88 wrapped around the vacuum chamber 86, formed preferably from a non-magnetic material (e.g., aluminum, copper). In embodiments in which vacuum chamber 86 is formed of a different material, such as stainless steel, electromagnetic shield 88 can be mechanically located around the outer wall of the vacuum chamber 86. Electromagnetic shield 88 also acts as an induction structure (i.e., supports induction currents) and is, therefore, multi-purposed. Specifically, electromagnetic shield 88 intercepts AC magnetic fields from the stator before they impact the superconducting windings 26 of the rotor assembly 12. Further, because electromagnetic shield 60 acts as an induction structure, it can be used to operate the synchronous superconducting motor 10 at start-up in an induction mode. The electromagnetic shield 88 allows the superconducting motor 10 to operate as an induction motor for start up or in a continuous mode as a backup mode in case of a catastrophic failure of the cryogenic systems.

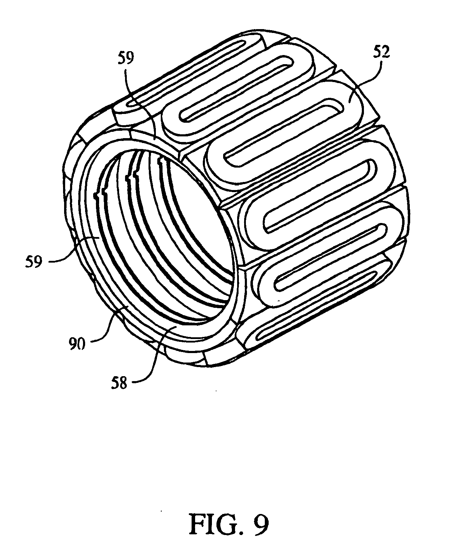

Referring to Fig. 9, the rotor assembly 50 further includes superconducting rotor coils 52 mounted to a stainless steel rotor body 58 for support. The rotor body 58 also carries the closed cryogenic cooling loop 118 that cools the rotor coils 52. The rotor body 58 is tubular with an inner surface 90 and an outer surface 92. The outer surface 92 may be generally cylindrical in shape, or may have flats machined to accept the rotor coils 52. The machined flats may, for example, give the outer surface 92 a general pentagonal, hexagonal or heptagonal shape. In the present invention, twelve flats have been machined to accept twelve flat rotor coils 52.

The rotor body 58 includes rotor body ribs 59 to mount the tangential buckles 70 and axial buckles 60, which interface with the output shaft 82. The rotor body ribs 59 are circumferentially fixed on the inner surface 90 and extend radially inward from the inner surface 90 of the rotor body 58.

In this embodiment, the superconductor in the rotor coils 52 is a high temperature copper oxide ceramic superconducting material, such as Bi₂Sr₂Ca₂Cu₃Oₓ or (BiPb)₂, commonly designated BSCCO 2223 or BSCCO (2.1)223. Other high temperature superconductors including YBCO (or superconductors where a rare earth element is substituted for the yttrium), TBCCO (i.e., thallium-barium-calcium-copper-oxide family), and HgBCCO (i.e., mercury-barium-calcium-copper-oxide family) are also within the scope of the invention. Rotor coils 52 may be formed with pancake coils either single or double layers. In certain embodiments, double pancake coils with the two coils of a pair being wound from the same continuous length of superconducting tape may be used. In this case, a pancake coil may include a diameter smaller than its associated pancake coil of the double pancake. An approach for using this approach is described in U.S. Patent 5,581,220, which is assigned to American Superconductor, the assignee of the present invention. Preferred embodiments are based on the magnetic and thermal properties of high temperature superconducting composites, preferably including superconducting ceramic oxides and most preferably those of the copper oxide family.

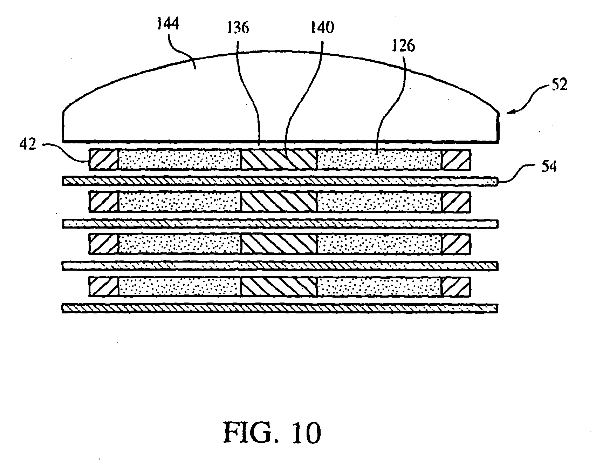

Referring to Fig. 10, the rotor coils 52, as described above, are fabricated with an internal support 54 to help stabilize the structure because the racetrack configuration produces tremendous bending stresses that attempt to push the superconducting coil assembly apart. To overcome this limitation, the rotor coils 52 are fabricated in a laminated configuration with internal coil supports 54, alternating between superconducting windings 126 and internal support 54. External supports, such as the inner spacer 140 and the outer spacer 142, do not sufficiently alleviate the internal stresses associated with non-circular and non-linear configurations, such as the racetrack configuration. The addition of internal coil supports 54 combined with the inner spacer 140 and outer spacer 142 gives mechanical strength to the rotor coil 52 and reduces the internal strains in the superconducting coils 126. The internal strains are reduced by using the internal coil supports 54 partly because the peak strains are located at the inside diameter of the superconducting coils 126, far removed from any external support structures that could be employed.

In the present embodiment, the internal coil support 54 is 1,016 mm (40 mil) thick stainless steel. However, it can be appreciated that various thicknesses and materials (such as copper or fiberglass composites) would work for their intended purposes, as various embodiments would require different thicknesses to optimize performance. In certain embodiments, a thermally conductive coating can be applied to the internal coil support 54 to provide better heat conductivity to cryogenic cooling tubes 118 located within the rotor body 58. For example, the internal coil support can be coated with copper.

A fastener can be used to tie the internal coil supports 54 together. For example, the layers can be mechanically fastened together by passing a bolt, or multiple bolts, through the internal coil supports 54 at a point within the annular opening 136 created by the superconductor windings 126 and fixing the assembly and top cap 144 to the rotor body 58. The bolts tie the internal coil supports 54 together into a unitary whole, resulting in even greater mechanical strength. The rotor coils 52 can also be epoxied together, with or without fasteners, to further fix the lamination together.

The internal coil support member 54 will also have various openings (not shown) to facilitate electrical connections between adjacent superconductor windings. Each superconducting coil assembly in the rotor coils 52 has to be electrically connected. Since the internal support members 54 are placed between each rotor coil 52, an opening must be provided to allow the electrical connection between each rotor coil 52.

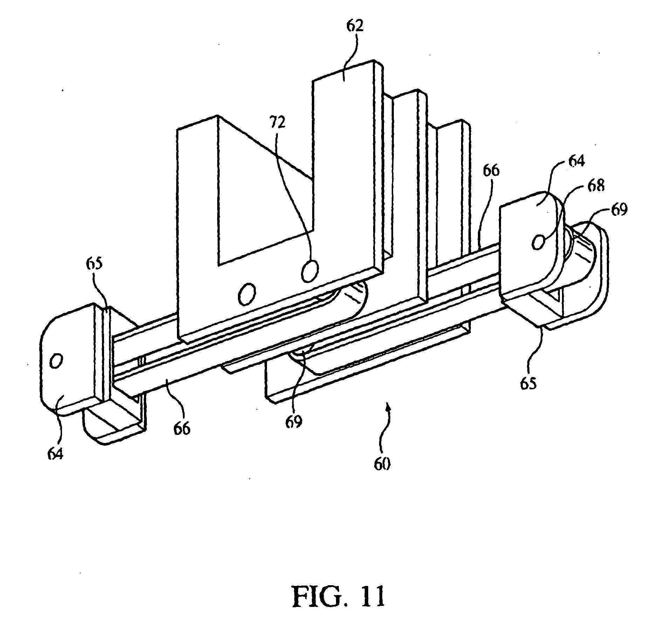

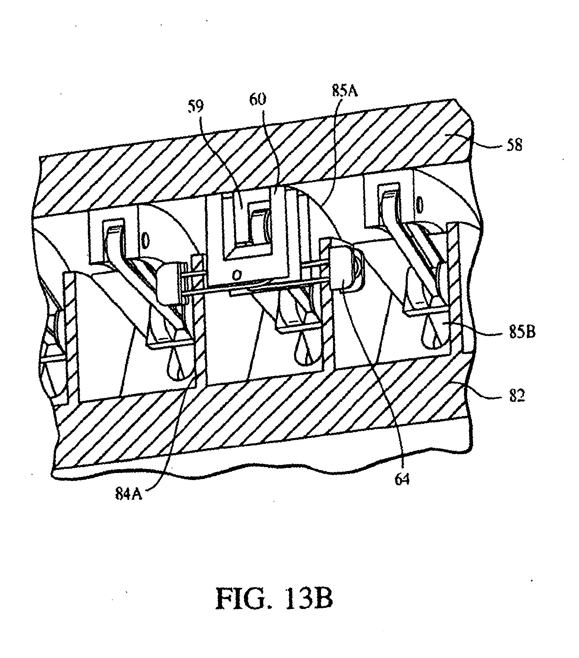

Referring to Figs. 11 and 13B, the axial buckles 60 are assembled in the rotor assembly 50 to prevent axial movement between the rotor body 58 and the output shaft 82. The axial buckles 60 also thermally isolate the cryogenically cooled rotor body 58 from the output shaft 82 by using a thermally isolating coupling band 66 between the coupling members 62 and 64.

A generally U-shaped coupling member 62 is mounted to the rotor body 58 by sliding the open end over the rotor body rib 59. The rotor body rib 59 constrains the U-shaped coupling member 62 in the axial direction. Two smaller coupling members 64 are mounted in opposing radial slots 85A in the circumferential output shaft plates 84A by a narrow shoulder 65 on one face of the smaller coupling members 64. The narrow shoulder 65 slides into the radial slot 85A while the rest of the smaller coupling member 64 is wider than the radial slot 85A, thereby preventing the smaller coupling member 64 from moving beyond the slot 85A. The two smaller coupling members 64 are mechanically coupled to the U-shaped coupling member 62 by thermally isolating coupling bands 66. The thermally isolating coupling bands 66 are Para-aramid/Epoxy straps. By using thermally isolating coupling bands 66, the output shaft 82 and the rotor body 58 are thermally isolated from each other since the coupling bands 66 are the only direct connection between the U-shaped coupling member 62 and the smaller coupling members 64. This thermal isolation helps prevent the output shaft 82 from acting as a heat sink.

The coupling bands 66 wrap around spherical ball end couplings 69 mounted in the U-shaped coupling member 62 and the smaller coupling members 64. The spherical ball end coupling 69 in one of the smaller coupling members is a cam 68, which is used to preload the coupling bands 66. Surrounding the cylindrical pins 72 and cam 68 are spherical ball ends 69. The spherical ball end couplings 69 hold the coupling band 66 and provide misalignment adjustment. The spherical ball end couplings 69 maintain even loading to the coupling band 66. The coupling bands 66 are preloaded by turning the cam 68 to vary the tension. The coupling bands 66 are 180° apart, which allows one cam to tension both coupling bands 66 at the same time and put both coupling bands 66 in uniaxial tension. This configuration also constrains the rotor body 58 and output shaft 82 in both axial directions.

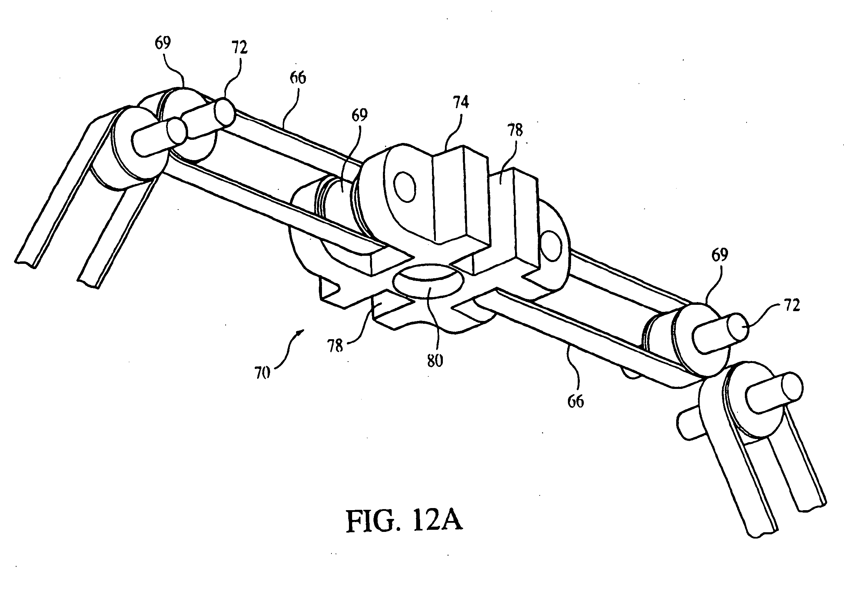

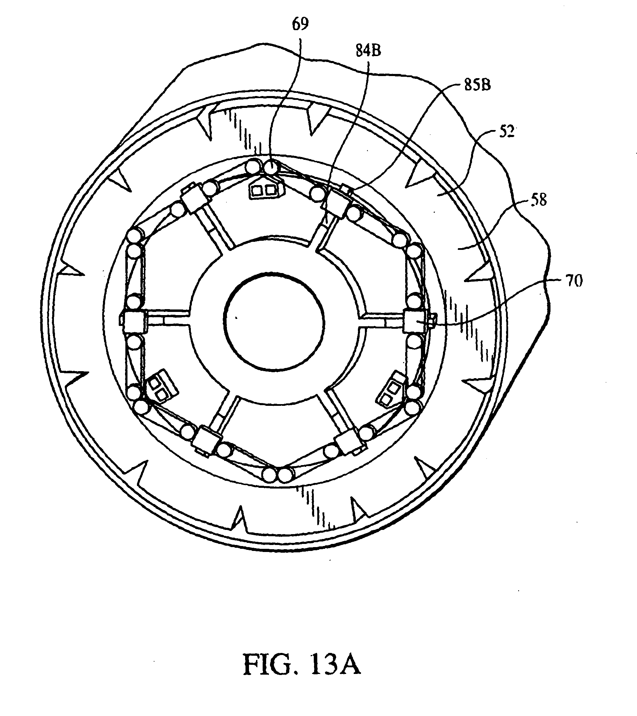

Referring to Figures 12A and 13A, the tangential buckles 70 are assembled in the rotor assembly 50 to transfer the rotational forces between the rotor body 58 and the output shaft 82. The tangential buckles 70 also thermally isolate the cryogenically cooled rotor body 58 from the output shaft 82 by using a thermally isolating coupling band 66 between the coupling members 72 and 74.

An X-shaped coupling member 74 is mounted to the output shaft 82 by two recessed slide mounting areas 78 located on opposing legs of the X-shaped coupling member 74. These recessed slide mount areas 78 are positioned such that the X-shape coupling member 74 mounts parallel to the axis of the output shaft 82. The recessed slide mounting areas 78 slide down into the radial slot 85B in the longitudinal plates 84B, which constrain the X-shaped coupling 74 in the circumferential and axial directions. Two spherical ball end couplings 69 are mounted between the rotor body ribs 59 by pressing a cylindrical pin 72 through the rotor body ribs 59 and a spherical ball end coupling 69. The spherical ball end couplings 69 are mechanically coupled to the X-shaped coupling member 74 by thermally isolating coupling bands 66. As discussed above, the thermally isolating coupling bands are Para-aramid/Epoxy straps, which thermally isolate the rotor body 58 from the output shaft 82.

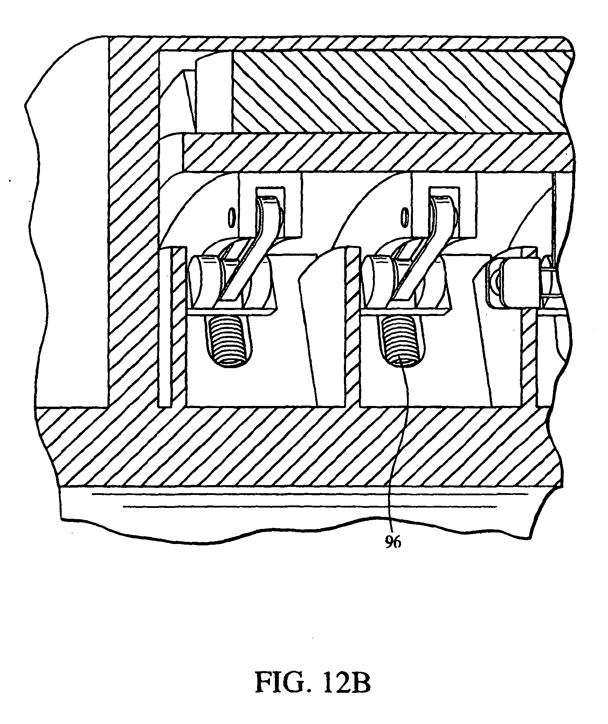

Referring to Figs. 12A and 12B, the coupling bands 66 wrap around spherical ball end couplings 69 mounted in the X-shaped coupling member 74, in the two legs not defining the recessed slide mounting area 78, and around the spherical ball end coupling 69 mounted in the rotor body ribs 59. The coupling bands 66 are mounted approximately 180° apart, which allows both coupling bands to be in uniaxial tension. The X-shaped coupling member 74 defines an opening 80 therethrough sized to accept a spring 96, which preloads both bands in uniaxial tension. The opening 80 is defined so as to be perpendicular to the axis of the output shaft 82 when the X-shaped coupling member 74 is mounted to the output shaft 82, allowing the spring 96 to push the X-shaped coupling member 74 radially outward. The spring 96 allows the tangential buckle 70 to be preloaded by compressing the spring 96. The spring 96 also allows for some compliance when the tangential buckle 70 is assembled within the rotor assembly 50. The compressed spring 96 allows each tangential buckle 70 to be quickly preloaded by adjusting to any manufacturing tolerance differentiation, for example, within the coupling bands 66, thereby facilitating a quicker build time for the rotor assembly 50. The preload feature also facilitates loading the coupling bands 66 in pure tension. By loading the coupling bands 66 in pure tension, the assembly can transmit an extremely large torque between the rotor body 58 and the output shaft 82.

The longitudinal output shaft plates 84B are sized within axial slots (Fig. 13A) in the rotor body 58 such that they will bottom out during a high fault loading situation, thereby preventing the coupling bands 66 from breaking. If a sudden shock load is applied to the motor 10, metal-to-metal contact will occur. The advantage to designing such a shock system is that the coupling bands 66 do not have to be sized for fault and shock loads, which would make the coupling bands 66 less practical.

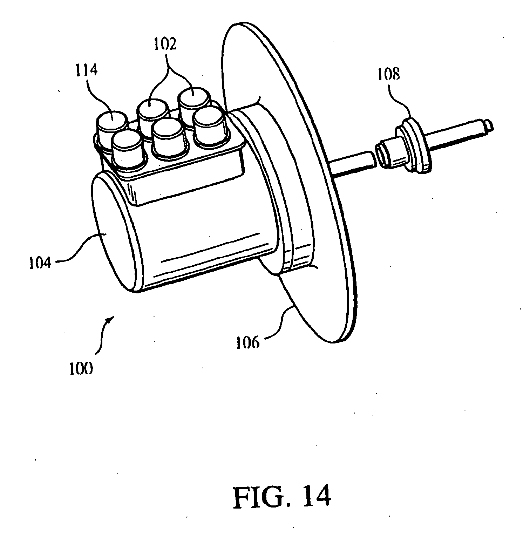

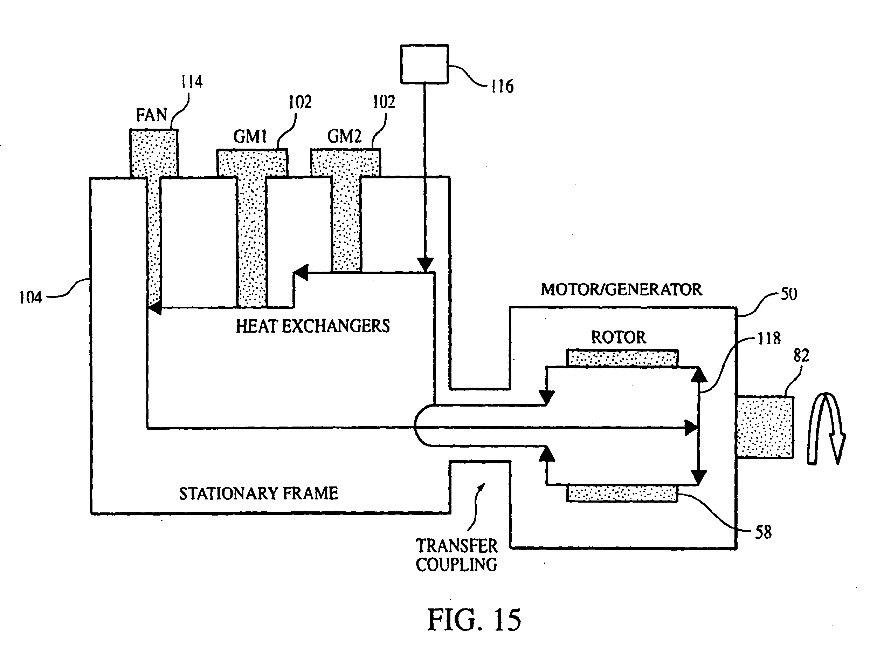

Referring to Figures 2, 14 and 15, a cryogenic cooling system 100 is used to maintain a cryogenic fluid at cryogenic temperatures and move the cryogenic fluid to and from a cryogenic cooling loop 118 located adjacent and in thermal communication with the rotor coils 52. The cryogenic fluid is moved through the cryogenic cooling loop 118 by a cryogenically adaptable fan 114. This system helps maintain the rotor coils 52 at cryogenic temperatures, because the superconducting rotor coils 52 have to be maintained at cryogenic temperatures (i.e., below -79°C) to operate properly and efficiently. The cryogenic cooling system 100 includes multiple cryogenically cooled surfaces 102, here Gifford-McMahon cold heads, mounted in cryocooler assemblies 104, a mounting flange 106 and a cryogenically adaptable fan 114. The cryogenic cooling system 100 utilizes a closed loop system for efficiency and ease of maintenance.

The advantage of more than one cryogenically cooled surface 102 is efficiency and ease of maintenance. First, more than one cryogenically cooled surface 102 in series will allow each cryogenically cooled surface 102 to work less to lower the temperature of the cryogenic fluid. Also, if one cryogenically cooled surfaces 102 malfunctions, the redundancy in the system will be able to overcome the loss. Further, if one cryogenically cooled surface 102 does malfunction, the malfunctioning cryogenically cooled surface 102 can be isolated from the system by proper valving, and maintenance performed without shutting down the system or introducing contaminants into the system.

The cryocooler assembly 104 mounts to the outside of the superconducting motor 10 via a mounting flange 106 fixed to the housing 12. The fixed cryocooler assembly 104 is in fluidic communication with a cryogenic cooling loop 118. In an embodiment with a rotating thermal load, such as the rotor coils 52, the cryocooler assembly 104 interfaces with the rotating cryogenic cooling loop 118 by interfacing with a rotary seal 108, here a ferrofluidic rotary seal. The rotary seal 108 allows the cryocooler assembly 104 to remain fixed while the cryogenic cooling loop 118 rotates with the rotor assembly 50. The cryocooler assembly 104 is maintained stationary, rather than rotating, due to undesirable high gravity heat transfer seen internal to the cryocooler assembly 104 if it were to rotate. The cryogenic cooling loop 118 is in thermal communication with the rotor coils 52, maintaining the rotor coils 52 at a cryogenic temperature.

The cryocooler assembly 104 is open to the vacuum chamber 86 of the rotor assembly 50. Keeping the internal area of the cryocooler assembly 104 at vacuum helps to isolate the portion of the cryogenic cooling loop 118 that is located within the cryocooler assembly 104 from outside temperatures. The vacuum isolation further helps improve the efficiency of the cryogenically cooled surfaces 102.

The cryogenic fluid, helium in this embodiment, is introduced into the system from a cryogenic fluid source 116. The cryogenic cooling system is a closed system, but cryogenic fluid will have to be added periodically should any leaks develop. Other cryogenic fluids, such as hydrogen, neon or oxygen, may also be used.

The cryogenic fluid must be moved from the cryocooler 104 to the portion of the cryogenic cooling loop 118 located within the rotor body 58. A cryogenically adaptable fan 114 is employed to physically move the cryogenic fluid. The advantage of a fan is that a fan does not require a heat exchanger to warm the fluid to the temperature of an ambient compressor, is inexpensive and is relatively small. In comparison, a prior art room temperature compressor in conjunction with a heat exchanger is more expensive and is much larger.

In the embodiments described above the rotor assembly included the rotor body 58 and the output shaft 82, which are both of one-piece design. In other embodiments, the rotor body and portions of the output shaft can be constructed from smaller, identical, and more manageable segments, thereby facilitating assembly.

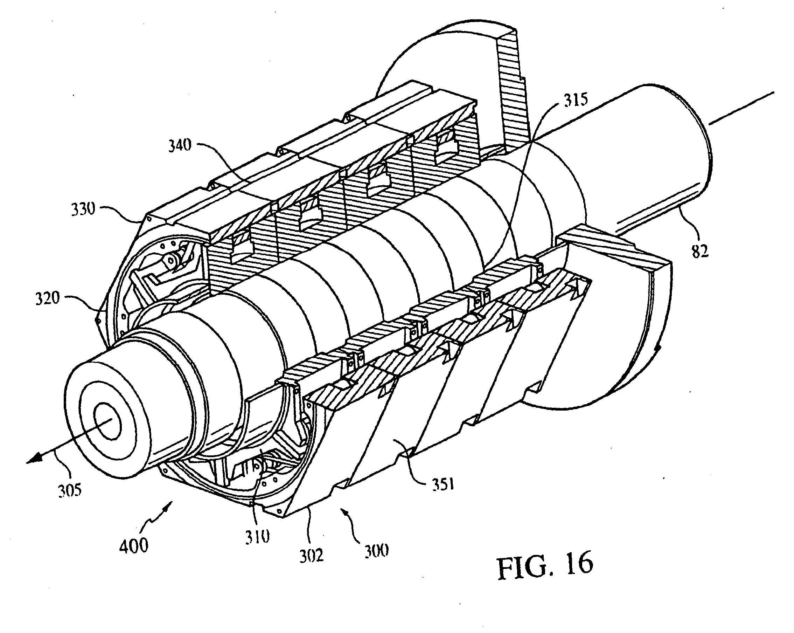

Referring to Fig. 16, for example, a segmented rotor assembly 400 is shown without an electromagnetic shield and superconducting coils. In this embodiment, the rotor assembly 400 is constructed with four hexagon-shaped rotor body segments 300. In other embodiments, the rotor assembly may include fewer or more rotor body segments and may have other polygonal shapes. Each rotor body segment 300 includes a support structure 302 surrounding a hub 310. Each support structure 302 includes a recessed face 320 on one interconnecting side, and a complementary protruding face 323 on the opposite side to allow stacking of the rotor body segments 300 during assembly. The hubs, in aggregate, form a bore that receives and engages the output shaft 82 of the superconducting motor 10. In particular, the outer surface of the output shaft 82 includes splining features 315 for engaging complementary non-cylindrical shaped portions of the hubs 310. During assembly, surfaces of the non-cylindrical splining features 315 lock axially to fit with corresponding surfaces of the hubs 310, so that, in operation, the hubs 310 transfer the torque generated by the superconducting coils 52 to the output shaft 82.

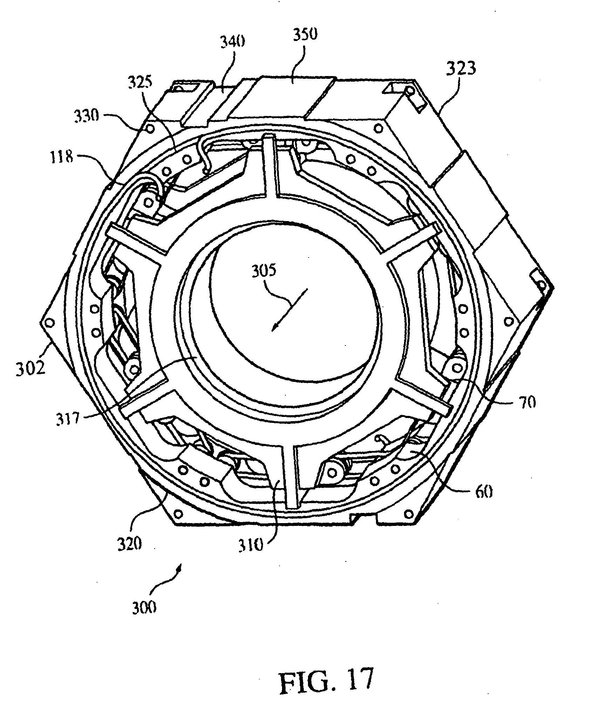

Referring as well to Fig. 17, each rotor body segment support structure 302 is mechanically coupled to a corresponding hub 310 with the same tangential buckles 70 and axial buckles 60 described above in conjunction with Fig. 7. As was the case in the embodiment of Fig. 7, the tangential buckles 70 and axial buckles 60 transfer the torque and forces produced by the superconducting coils 52, while thermally isolating the cryogenically cooled rotor body from the output shaft 82. In this embodiment, the buckle assemblies transfer the torque and forces, produced by the superconducting coils 52, from the support structure 302 to the hub 310 while thermally isolating the support structure 302 from the hub 310. In turn, the hub 310 transfers the torque and forces to the mechanically coupled output shaft 82 through the splining features.

As shown most clearly in Fig. 17, manageability of and access to the tangential buckles 70 and axial buckles 60, as well as the segment support structure 302 and hub 310 (to which they are connected) is facilitated by the segmented construction of this embodiment. Because each individual rotor body segment is smaller and virtually identical, working on the segmented rotor assembly 400 and its components (i.e., assembly, maintenance, and replacement) is much easier than working on a one-piece design rotor assembly. In particular, the problem of access to the internal buckle assemblies (that is, those that are not accessible at the ends) is minimized. Once the individual rotor body segment support structures, hubs, and buckle assemblies are assembled into a unit, they can, in turn, be assembled into a complete rotor assembly, as shown in Fig. 16, in the manner described below.

Each rotor body segment support structure 302 includes at least two outer surfaces having recesses 340. To assemble the four rotor body segments, each segment is positioned along a longitudinal axis 305 of the rotor assembly so that the recesses are aligned and elongated wedge key (not shown) are secured within the recesses 300. In this manner, a tangential lock is provided across the segmented rotor assembly 400 and torque generated by the superconducting coils 52 is uniformly distributed across all of the rotor body segments 300. Each rotor body segment support structure 302 also includes holes 330 for receiving bolting screws (not shown) to secure adjacent rotor body segments 300. In one embodiment the bolting screws can have a length sufficient to extend through all of the segments. In another embodiment, one end of the holes 330 may be threaded to secure the bolting screw.

Referring to Fig 17, each of the outer surfaces, of the rotor body segment support structure 302, include a raised surface 350 which when assembled together with other rotor body segments, form a raised surface 351 for receiving a superconducting coil 52. In many applications, the raised surface 351 is machined as a matched set before assembly, to ensure flatness so that minimal stress and strain is induced on the mounted superconducting rotor coil 52.

Each rotor body segment support structure 302 includes at least one channel 325 disposed peripherally about the support structure within which a cryogenic cooling tube loop 118 is disposed. The cryogenic tube receives coolant from an external source for cooling the superconducting coils 52. The coolant enters, then traverses the channel 325 and then is expelled by the closed cryogenic cooling loop 118 to the external source. The inner diameter of the hub 310 includes a complementary non-cylindrical splining feature 317 that interlocks the non-cylindrical splining feature 315 of the output shaft 82. This allows the output shaft 82 to press fit into the hub without further connection mechanisms. Thermal isolation of the hub 310 results in no temperature gradient between the hub 310 and the output shaft 82. Thus the temperature reduction produced by the coolant does not appear to the output shaft 82 of the superconducting motor 10.

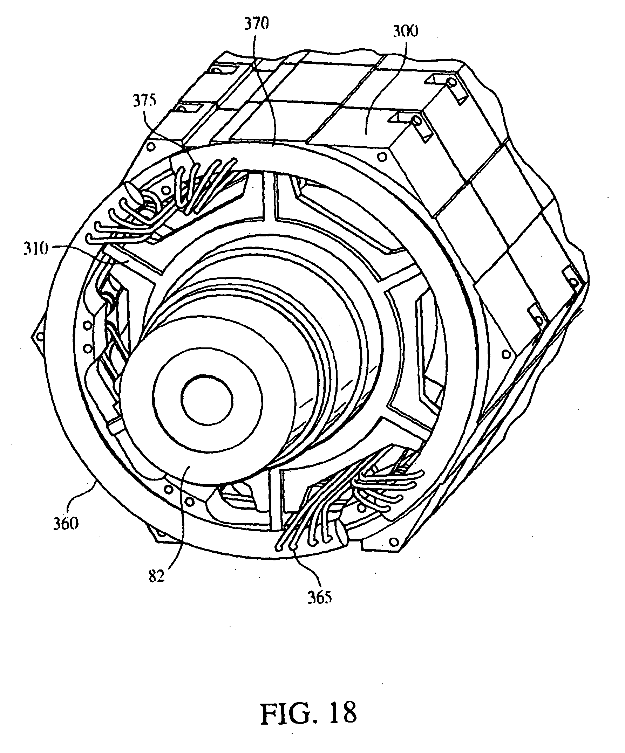

Referring to Fig. 18, an inflow manifold 360 and an outflow manifold 370 are shown both mounted circumferentially over the output shaft 82 at one end of the segmented rotor body 400. The manifolds 360, 370 are thermally isolated from each other and distribute the coolant, into the rotor body segments 300, for cooling the superconducting coils 52. In particular, the inflow manifold 360 directs inflowing coolant from the external source into each closed cryogenic cooling loop 118 located in each rotor body segment support structure 302. A fluid feed line 365 connects each closed cryogenic cooling loop 118 input to the inflow manifold 360. Correspondingly a fluid feed line 375 connects each closed cryogenic cooling loop 118 output to the outflow manifold 370 for collection of the coolant by the external source.

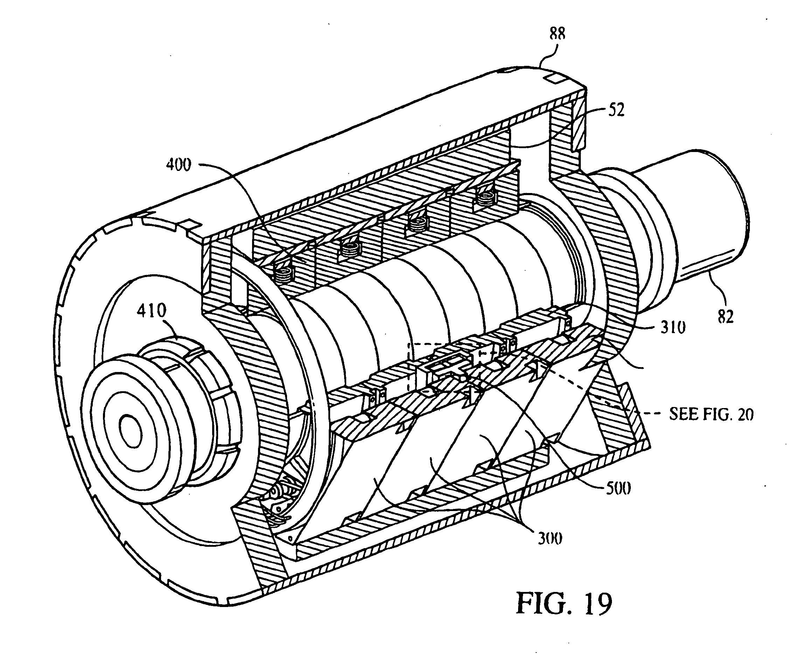

Referring to Fig. 19, in another embodiment, the segmented rotor assembly 400 is shown having the electromagnetic shield 88 surrounding mounted superconducting rotor coils 52. In this embodiment, the union of four rotor body segments 300 forms the segmented rotor assembly 400. Each junction between adjacent rotor body segments 300 includes an axial compression device 500 (for simplicity, only one axial compression device --within dashed lines -- is shown in Fig. 19) for connecting a hub 310 to a corresponding support structure 302. Unlike the embodiment described above in conjunction with Figs. 17 and 18, the axial compression devices 500 are used in place of the axial buckles 60 of the type shown in Fig. 7. The axial compression devices 500 use compression, instead of the tension provided by the axial buckles 60, to prevent axial movement of the segmented rotor assembly 400 and the output shaft 82 while providing thermal isolation between the cryogenically cool support structure and the warm hub.

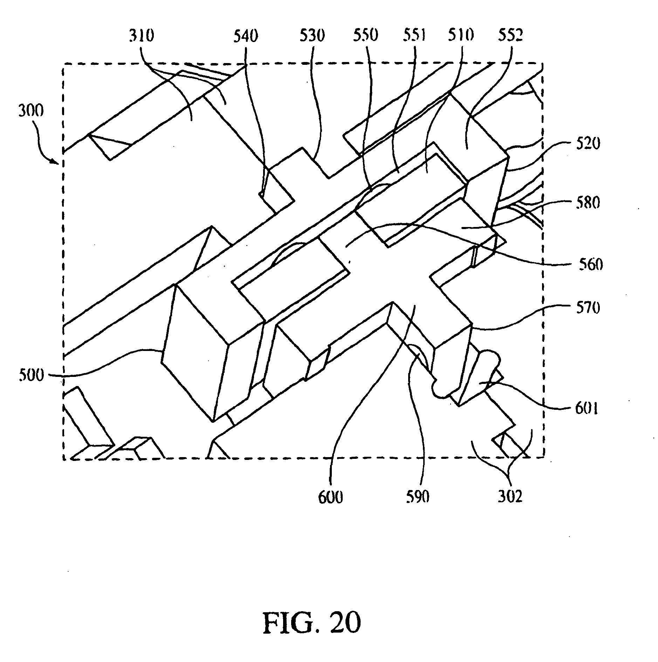

Referring to Fig. 20, each axial compression device 500 includes a pair of compression blocks 510, a generally U-shaped support member 530, and a cross-shaped support member 570. The U-shaped support member 530 connects the compression blocks 510 to the hubs 310, while the cross-shaped support member 570 connects the composite material blocks 510 to the support structures 302. The U-shaped support member 530 and cross-shaped support member 570 are typically formed from a mechanically strong material (e.g., steel or stainless steel), while the compression blocks 510 are formed of a mechanically rigid and thermally insulative material, such as glass reinforced epoxy (e.g., G-10).

The generally U-shaped support member 530 is received by a cutout 540 formed at the junction of a pair of adjacent hubs 310. Bolts 550 secure the U-shaped support member 530 to each of the hubs 310. The U-shaped support member 530 includes an opening 551 defined by a pair of extending arms 552. The opening 551 receives a lower arm 560 of the cross-shaped support member 570 positioned between two compression blocks 510. Two horizontal arms 580 of the cross-shaped support member 570 attach to the pair of corresponding adjacent support structures 302. A bolt 590 secures an upper arm 600, of the cross-shaped support member 570, into a cutout 601 formed at the junction of the adjacent support structures 302.

In one particular embodiment, the composite material blocks 510 loosely fit into the U-shaped support member 530 to allow for thermal expansion and compression and decompression of the blocks in either axial direction. In certain embodiments, the blocks are bonded together (e.g., with fasteners, epoxy) so that the blocks withstand high load compression while providing thermal isolation.

In one particular embodiment, the axial compression devices 500 are positioned circumferentially every 120° about the junction of adjacent rotor body segments 300. In this case, three axial compression devices 500 are positioned about the circumference of each junction. In another embodiment, the axial compression devices are positioned circumferentially every 60° about the junction of adjacent rotor body segments 300. With this arrangement, six axial compression devices 500 are positioned about the circumference of each junction. The ability to withstand high load compression allows a woven glass material to be utilized in the composite material blocks 510. With low thermal conductivity, woven glass material can also provide the thermal isolation between the cryogenically cooled segmented rotor assembly 400 and the output shaft 82.

A number of embodiments of the invention have been described. Nevertheless, it will be understood that various modifications may be made without departing from the scope of the invention. For example, the components described could be adapted to produce other superconducting rotating machines, such as a superconducting generator. Accordingly, other embodiments are within the scope of the following claims.

## Claims

1. A superconducting rotating machine comprising:
a stator assembly (20);
a rotor assembly (50) configured to rotate within the stator assembly and spaced from the stator assembly by a gap, the rotor assembly including:
at least one high temperature superconducting winding assembly which, in operation, generates a magnetic flux linking the stator assembly,
the at least one superconducting winding assembly has an axis extending from a first end to a second end of the winding assembly, the winding assembly including a superconducting coil (52) having a superconductor tape wound about and disposed along an axis of the winding assembly to provide a plurality of concentric turns defining an opening, each turn of the superconductor tape having a broad surface maintained substantially parallel to the axis of the winding assembly,
the at least one superconducting winding assembly further comprising
a plurality of superconducting coils (52); and
a cryogenic cooling system (100) for cooling the at least one superconducting winding of the rotor assembly;
**characterized In that** the superconducting rotating machine having a gap shear stress substantially in the range of 103,421 N/m² (15 psi) and 689,476 N/m2 (100 psi),
**in that** the at least one winding assembly further comprises
at least one internal support member (54) positioned between adjacent ones of the plurality of superconducting windings;
whereby the at least one internal support member is adjacent the broad surface of the at least one of the plurality of superconducting coils, forming a laminated stack alternating between an internal support member and a superconducting coil,
and **in that**
the superconducting rotating machine has a torque density of substantially 75 N m/Kg or more at substantially 500 revolutions per minute or less.

2. A superconducting rotating machine comprising:
a stator assembly (20) having
a stator coil (22) including at least one conductive winding;
a rotor assembly (50) configured to rotate within the stator assembly and spaced from the stator assembly by a gap, the rotor assembly including:
at least one high temperature superconducting winding assembly which, in operation, generates a magnetic flux linking the stator assembly; and
a cryogenic cooling system (100) for cooling the at least one superconducting winding of the rotor assembly;
**characterized in that** the superconducting rotating machine having a gap shear stress substantially in the range of 103,421 N/m² (15 psi) and 689,476 N/m2 (100 psi),
**in that** the stator assembly further includes:
an electrically insulating material (26) disposed around the stator coil;
at least one cooling conduit (30) for receiving a coolant from an outside source, the at least one cooling conduit disposed adjacent a first portion of an outer surface of the stator coil;
and
a thermally conductive member (32) disposed around the at least one cooling conduit and a second portion of the outer surface of the stator coil to transfer heat from the second portion to the at least one cooling conduit, thereby reducing the temperature gradient in the electrically insulating material,
and **in that**
the superconducting rotating machine has a torque density of substantially 75 N m/Kg or more at substantially 500 revolutions per minute or less.

3. The superconducting rotating machine of claim 2 wherein the at least one superconducting winding assembly has an axis extending from a first end to a second end of the winding assembly, the winding assembly including a superconducting coil (52) having a superconductor tape wound about and disposed along an axis of the winding assembly to provide a plurality of concentric turns defining an opening, each turn of the superconductor tape having a broad surface maintained substantially parallel to the axis of the winding assembly.

4. The superconducting rotating machine of claim 3 wherein the superconductor tape is wound in a racetrack shape defining a pair of opposing arcuate end sections and a pair of opposing substantially straight side sections.

5. The superconducting rotating machine of claim 3 wherein the superconductor tape includes a multi-filament composite superconductor including individual superconducting filaments which extend the length of the multi-filament composite conductor and are surrounded by a matrix-forming material.

6. The superconducting rotating machine of claim 3 wherein the superconductor tape includes an anisotropic high temperature superconductor.

7. The superconducting rotating machine of claim 6 wherein the anisotropic high temperature superconductor is Bi2Sr2Ca2Cu3O.

8. The superconducting rotating machine of claim 6 wherein the anisotropic high temperature superconductor is a member of the rare-earth-copper-oxide family.

9. The superconducting rotating machine of claim 3 wherein the at least one superconducting winding assembly further comprises:
a plurality of superconducting coils (52); and at least one internal support member (54) positioned between adjacent ones of the plurality of superconducting windings;
whereby the at least one internal support member is adjacent the broad surface of the at least one of the plurality of superconducting coils, forming a laminated stack alternating between an internal support member and a superconducting coil.

10. The superconducting rotating machine of claim 9 wherein the superconducting winding assembly further comprises a plurality of superconducting coils (52) and a plurality of internal support members (54) wherein a laminated stack is created alternating between a superconducting coil and an internal support member.

11. The superconducting rotating machine of claim 9 wherein the at least one internal support member is stainless steel with a thickness ranging from 0.002 cm (0.005 inches) to 0.04 cm (0.1 inches).

12. The superconducting rotating machine of claim 1 or 2 further comprising a vacuum region disposed about the rotor assembly.

13. The superconducting rotating machine of claim 1 or 2 further comprising:
a shaft (82) disposed through the rotor assembly along the rotor assembly axis and spaced from the rotor assembly by a gap; and
a plurality of tangential buckle assemblies (70);
wherein the plurality of tangential buckle assemblies mounts the rotor assembly to the shaft to allow rotational forces to be transferred between the rotor assembly and the shaft.

14. The superconducting rotating machine of claim 13 wherein the tangential buckle assemblies further comprise thermal isolation bands to thermally isolate the rotor assembly from the shaft.

15. The superconducting rotating machine of claim 14 wherein the thermal isolation bands are formed of a material including reinforced epoxy.

16. The superconducting rotating machine of claim 13 further comprising:
a plurality of axial buckle assemblies (60) wherein the plurality of axial buckle assemblies mount the rotor assembly to the shaft to secure the rotor assembly axially to the shaft.

17. The superconducting rotating machine of claim 16 wherein the axial buckle assemblies further comprise thermal isolation bands (66) to thermally isolate the rotor assembly from the shaft.

18. The superconducting rotating machine of claim 17 wherein the thermal isolation bands are Para-aramid/Epoxy straps.

19. The superconducting rotating machine of claim 1 or 2 wherein the stator assembly comprises a plurality of diamond-shaped coils (22).

20. The superconducting rotating machine of claim 1 wherein the stator assembly comprises:
a stator coil (22) including at least one conductive winding;
an electrically insulating material (26) disposed around the stator coil;
at least one cooling conduit (30) for receiving a coolant from an outside source, the at least one cooling conduit disposed adjacent a first portion of an outer surface of the stator coil; and
a thermally conductive member (32) disposed around the at least one cooling conduit and a second portion of the outer surface of the stator coil to transfer heat from the second portion to the at least one cooling conduit, thereby reducing the temperature gradient in the electrically insulating material.

21. The superconducting rotating machine of claim 20 wherein the electrically insulating material (26) is provided at varying thickness at each stator coil, the thickness being proportional to a voltage difference at each stator coil within the stator assembly, the maximum thickness being on the stator coils experiencing line voltage.

22. The superconducting rotating machine of claim 20 wherein the at least one cooling conduit (30) further comprises a plurality of passageways therethrough.

23. The superconducting rotating machine of claim 1 or 2 wherein the cryogenic cooling system comprises:
a cryostat including a cryogenically cooled surface (102) and defining a cryogenic environment; and
a cryogenic fluid transport device (114) disposed within the cryogenic environment, the cryostat being in fluidic communication with a remote thermal load and the cryogenic fluid transport device moving a cryogenic fluid between the cryostat and the remote thermal load and allowing the cryogenically cooled surface to remove the heat in the cryogenic fluid gathered at the remote thermal load.

24. The superconducting rotating machine of claim 23 further comprising:
a closed cooling loop (118) in fluidic communication with the cryogenically cooled surfaces and in thermal communication with the remote thermal load.

25. The superconducting rotating machine of claim 24 wherein the remote thermal load is the rotor assembly.

26. The superconducting rotating machine of claim 25 further comprising a rotary coupling (108) wherein the rotary coupling allows the cryostat to remain stationary while the closed cooling loop rotates with the rotor assembly.

27. The superconducting rotating machine of claim 23 wherein the cryogenic fluid transport device (114) does not require a phase change in the cryogenic fluid.

28. The superconducting rotating machine of claim 27 wherein the cryogenic fluid transport device (114) is cryogenically adaptable fan.

29. The superconducting rotating machine of claim 23 wherein the plurality of cryogenically cooled surfaces are cold heads

30. The superconducting rotating machine of claim 23 wherein the plurality of cryogenically cooled surfaces are pulse tube cold heads.

## Patentansprüche

1. Superleitende Rotationsvorrichtung mit:
einer Statoranordnung (20);
einer Rotoranordnung (50), welche zum Drehen innerhalb der Statoranordnung eingerichtet ist und von der Statoranordnung durch einen Spalt beabstandet ist,
wobei die Rotoranordnung aufweist:
mindestens eine Hochtemperatur-leitende Windungsanordnung welche im Betrieb einen magnetischen Fluss erzeugt, welcher die Statoranordnung verbindet,
wobei die mindestens eine spraleitende Windungsanordnung eine Achse aufweist, welche sich von einem ersten Ende zu einem zweiten Ende der Windungsanordnung erstreckt, wobei die Windungsanordnung eine supraleitende Spule (52) beinhaltet, welche eine supraleitendes Band gewickelt um und angeordnet entlang einer Achse der Windungsanordnung zum Bereitstellen einer Mehrzahl von konzentrischen Wicklungen aufweist, welche eine Öffnung festlegen, wobei jede Wicklung des supraleitenden Bandes eine breite Oberfläche aufweist, welche im Wesentlichen parallel zur Achse der Windungsanordnung eingehalten ist,
wobei die zumindest eine supraleitende Windungsanordnung weiterhin aufweist: eine Mehrzahl von supraleitenden Spulen (52); und
kryogenes Kühlsystem (100) zum Kühlen der mindestens einen supraleitenden Windung der Rotoranordnung;
**dadurch gekennzeichnet, dass** die supraleitende Rotationsvorrichtung einen Spaltenscherstress im Wesentlichen im Bereich von 103,421 N/m² (15 psi) bis 689,476 N/m² (100 psi) aufweist,
dass die zumindest eine Windungsanordnung weiterhin aufweist:
zumindest ein internes Stützelement (54) welches zwischen benachbarten der Mehrzahl von supraleitenden Windungen angeordnet ist;
wodurch das zumindest eine interne Stützelement neben der breiten Oberfläche der zumindest einen der Mehrzahl von supraleitenden Spulen liegt und einen laminierten Stapel alternierend zwischen einem internen Stützelement und einer supraleitenden Spule bildet:
und das die supraleitende Rotationsvorrichtung eine Drehmomentdichte im Wesentlichen von 75 N m/Kg oder mehr beim wesentlichen 500 Umdrehungen pro Minute oder weniger aufweist.

2. Supraleitende Rotationsvorrichtung mit:
einer Statoranordnung (20) mit
einer Statorspule (22) mit zumindest einer leitfähigen Windung;
einer Rotoranordnung (50), welche zum Drehen innerhalb der Statoranordnung eingerichtet ist und von der Statoranordnung durch einen Spalt beabstandet ist, wobei die Rotoranordnung aufweist:
mindestens eine Hochtemperatur-Supraleitende Windungsanordnung welche im Betrieb einen magnetischen Fluss erzeugt, welcher die Statoranordnung verbindet; und
ein kryogenes Kühlsystem (100) zum Kühlen der mindestens einen supraleitenden Windung der Rotoranordnung;
**dadurch gekennzeichnet, dass** die supraleitende Rotationsvorrichtung einen Spaltenscherstress im Bereich von 103,421 N/m² (15 psi) bis 689,476 N/m² (100 psi) aufweist,
dass die Statoranordnung weiterhin aufweist:
ein elektrisch isolierendes Material (26), welches um die Statorspule herum angeordnet ist;
zumindest eine Kühlleitung (30) zum Empfangen eines Kühlmittels von einer äußeren Quelle, wobei die zumindest eine Kühlleitung neben einem ersten Bereich einer äußeren Oberfläche der Statorspule angeordnet ist; und
ein thermisch leitfähiges Element (32), welches um die zumindest eine Kühlleitung und einen zweiten Bereich der äußeren Oberfläche der Statorspule angeordnet ist, um Wärme von dem zweiten Bereich zu der zumindest einen Kühlleitung zu transferieren und **dadurch** den Termperaturgradienten in dem elektrisch isolierenden Material zu reduzieren,
und dass die supraleitende Rotationsvorrichtung eine Drehmomentdichte im Wesentlichen von 75 N m/kg oder mehr bei im Wesentlichen 500 Umdrehungen oder weniger aufweist.

3. Supraleitende Rotationsvorrichtung nach Anspruch 1, wobei mindestens eine supraleitende Windungsanordnung eine Achse aufweist, welche sich von einem ersten Ende zu einem zweiten Ende der Windungsanordnung erstreckt, wobei die Windungsanordnung eine supraleitende Spule (52) beinhaltet, welche ein supraleitendes Band gewickelt um und angeordnet entlang einer Achse der Windungsanordnung zum Bereitstellen einer Mehrzahl von konzentrischen Wicklungen aufweist, welche eine Öffnung festlegen, wobei jede Wicklung des supraleitenden Bandes eine breite Oberfläche aufweist, welche im Wesentlichen parallel zu der Achse der Windungsanordnung eingehalten ist.

4. Supraleitende Rotationsvorrichtung nach Anspruch 3, wobei das supraleitende Band in einer Rennbahnform gewickelt ist, welche ein Paar von gegenüberliegenden gebogenen Endabschnitten und ein Paar von gegenüberliegenden, im Wesentlichen geraden Seitenabschnitten festlegt.

5. Supraleitende Rotationsvorrichtung nach Anspruch 3, wobei das supraleitende Band einen mehrfaserigen zusammengesetzten Supraleiter beinhaltet, welcher individuelle supraleitende Fasern beinhaltet, welche sich entlang der Länge des mehrfaserigen zusammengesetzten Leiters erstrecken und durch ein matrixförmiges Material umgeben sind.

6. Supraleitende Rotationsvorrichtung nach Anspruch 3, wobei das supraleitende Band einen anisotropischen Hochtemperatur-Supraleiter beinhaltet.

7. Supraleitende Rotationsvorrichtung nach Anspruch 6, wobei der anisotrope Hochtemperatur-Supraleiter Bi₂Sr₂Ca₂Cu₃O ist.

8. Supraleitende Rotationsvorrichtung nach Anspruch 6, wobei der anisotrope Hochtemperatur-Supraleiter ein Mitglied der Seltenen-Erden-Kupferoxid-Familie ist.

9. Supraleitende Rotationsvorrichtung nach Anspruch 3, wobei die mindestens eine supraleitende Windungsanordnung ferner aufweist:
eine Mehrzahl von supraleitenden Spulen (52); und
mindestens ein internes Trägerglied (54), welches zwischen angrenzenden supraleitenden Windungen der Mehrzahl von supraleitenden Windungen angeordnet ist;
wobei das mindestens eine interne Trägerglied angrenzend an die breite Oberfläche der mindestens einen der Mehrzahl von supraleitenden Spulen ist, welche einen geschichteten Stapel bilden, welcher zwischen einem internen Trägerglied und einer supraleitenden Spule alterniert.

10. Supraleitende Rotationsvorrichtung nach Anspruch 9, wobei die supraleitende Windungsanordnung ferner aufweist:
eine Mehrzahl von supraleitenden Spulen (52) und eine Mehrzahl von internen Trägergliedern (54), wobei ein geschichteter Stapel durch Alternieren zwischen einer supraleitenden Spule und einem internen Trägerglied erzeugt wird.

11. Supraleitende Rotationsvorrichtung nach Anspruch 9, wobei das mindestens eine interne Trägerglied rostfreier Stahl mit einer Dicke im Bereich von 0,002 cm (0,005 inch) bis 0,04 cm (0,1 inch) ist.

12. Supraleitende Rotationsvorrichtung nach Anspruch 1 oder 2, welche ferner einen Vakuumbereich angeordnet um die Rotoranordnung aufweist.

13. Supraleitende Rotationsvorrichtung nach Anspruch 1 oder 2, welche ferner aufweist:
eine Welle (82), welche durch die Rotoranordnung entlang der Rotoranordnungsachse und beabstandet zu der Rotoranordnung durch einen Spalt angeordnet ist; und
eine Mehrzahl von tangentialen Schnallenanordnungen (70);
wobei die Mehrzahl der tangentialen Schnallenanordnungen die Rotoranordnung an der Welle befestigt, um es Rotationskräften zu ermöglichen, zwischen der Rotoranordnung und der Welle übertragen zu werden.

14. Supraleitende Rotationsvorrichtung nach Anspruch 13, wobei die tangentiale Schnallenanordnung ferner thermische Isolationsbänder zum thermischen Isolieren der Rotoranordnung von der Welle aufweist.

15. Supraleitende Rotationsvorrichtung nach Anspruch 14, wobei die thermischen Isolationsbänder aus einem Material gebildet sind, welches verstärktes Epoxy beinhaltet.

16. Supraleitende Rotationsvorrichtung nach Anspruch 13, welche ferner aufweist:
eine Mehrzahl von axialen Schnallenanordnungen (60), wobei die Mehrzahl der axialen Schnallenanordnungen die Rotoranordnung an dem Schaft befestigt, um die Rotoranordnung axial an dem Schaft zu sichern.

17. Supraleitende Rotationsvorrichtung nach Anspruch 16, wobei die axiale Schnallenanordnung ferner thermische Isolationsbänder (66) zum thermischen Isolieren der Rotoranordnung vor dem Schaft aufweist.

18. Supraleitende Rotationsvorrichtung nach Anspruch 17, wobei die thermischen Isolationsbänder Para-Aramid/Epoxy-Streifen sind.

19. Supraleitende Rotationsvorrichtung nach Anspruch 1 oder 2, wobei die Statoranordnung eine Mehrzahl von diamantförmigen Spulen (22) beinhaltet.

20. Supraleitende Rotationsvorrichtung nach Anspruch 1 oder 2, wobei die Statoranordnung aufweist:
eine Statorspule (22), welche mindestens eine leitfähige Windung aufweist;
ein elektrisch isolierendes Material (26), welches um die Statorspule angeordnet ist;
mindestens einen Kühlkanal (30) zum Empfangen eines Kühlmittels von einer äußeren Quelle, wobei der mindestens eine Kühlkanal benachbart an einem ersten Teil einer äußeren Oberfläche der Statorspule angeordnet ist; und
ein thermisch leitfähiges Glied (32), das um den mindestens einen Kühlkanal und einen zweiten Teil der äußeren Oberfläche der Statorspule zum Übertragen von Wärme von dem zweiten Teil auf den mindestens einen Kühlkanal angeordnet ist, wodurch der Temperaturgradient in dem elektrisch isolierenden Material reduziert wird.

21. Supraleitende Rotationsvorrichtung nach Anspruch 20, wobei das elektrisch isolierende Material (26) mit variierender Dicke an jeder Statorspule angeordnet ist, wobei die Dicke proportional zu einer Spannungsdifferenz jeder Statorspule innerhalb der Statoranordnung ist, wobei die maximale Dicke an der Statorspule ist, welche eine Leitungsspannung erfährt.

22. Supraleitende Rotationsvorrichtung nach Anspruch 20, wobei der mindestens eine Kühlkanal (30) ferner eine Mehrzahl von Durchgängen **dadurch** aufweist.

23. Supraleitende Rotationsvorrichtung nach Anspruch 1 oder 2, wobei das kryogene Kühlsystem aufweist:
einen Kryostat, welcher eine kryogen-gekühlte Oberfläche (102) beinhaltet und eine kryogene Umgebung definiert; und
eine kryogene Flüssigkeitstransportvorrichtung (114), welche innerhalb der kryogenen Umgebung angeordnet ist,
wobei der Kryostat in flüssiger Kommunikation mit einer fernen thermischen Last ist und wobei die kryogene Flüssigkeitstransportvorrichtung eine kryogene Flüssigkeit zwischen dem Kryostaten und der fernen thermischen Last bewegt und es der kryogenen gekühlten Oberfläche ermöglicht, die Wärme in der kryogenen Flüssigkeit zu entfernen, welche an der fernen thermischen Last aufgesammelt wurde.

24. Supraleitende Rotationsvorrichtung nach Anspruch 23, welche ferner aufweist:
eine geschlossene Kühlschleife (118) in flüssiger Kommunikation mit den kryogen gekühlten Oberflächen und in thermischer Kommunikation mit der fernen thermischen Last.

25. Supraleitende Rotationsvorrichtung nach Anspruch 24, wobei die ferne thermische Last die Rotoranordnung ist.

26. Supraleitende Rotationsvorrichtung nach Anspruch 25, welche ferner eine drehende Kopplung (108) aufweist, wobei es die drehende Kopplung dem Kryostaten ermöglicht, stationär zu verbleiben, während sich die geschlossene Kühlschleife mit der Rotoranordnung dreht.

27. Supraleitende Rotationsvorrichtung nach Anspruch 23, wobei die kryogene Flüssigkeitstransportvorrichtung (114) keinen Phasenwechsel in der kryogenen Flüssigkeit benötigt.

28. Supraleitende Rotationsvorrichtung nach Anspruch 27, wobei die kryogene Flüssigkeitstransportvorrichtung (114) ein kryogen anpassbarer Lüfter ist.

29. Supraleitende Rotationsvorrichtung nach Anspruch 23, wobei die Mehrzahl von kryogen gekühlten Oberflächen gekühlte kalte Köpfe (Cold Heads) aufweist.

30. Supraleitende Rotationsvorrichtung nach Anspruch 23, wobei die Mehrzahl von kryogen gekühlten Oberflächen Pulsröhren-kalte-Köpfe (Pulse Tube Cold Heads) aufweist.

## Revendications

1. Machine rotative supraconductrice comprenant :
un ensemble stator (20) ;
un ensemble rotor (50) configuré pour tourner à l'intérieur de l'ensemble stator et espacé de l'ensemble stator par un espace, l'ensemble rotor incluant :
au moins un ensemble à enroulement supraconducteur à haute température qui, en fonctionnement, produit un flux magnétique liant l'ensemble stator,
le au moins un ensemble à enroulement supraconducteur a un axe allant d'une première extrémité à une seconde extrémité de l'ensemble à enroulement, l'ensemble à enroulement incluant une bobine supraconductrice (52) ayant un ruban supraconducteur enroulé autour et disposé le long d'un axe de l'ensemble à enroulement pour constituer une pluralité de tours concentriques définissant une ouverture, chaque tour du ruban supraconducteur ayant une large surface maintenue sensiblement parallèlement à l'axe de l'ensemble à enroulement,
l'au moins un ensemble à enroulement supraconducteur comprenant en outre :
une pluralité de bobines supraconductrices (52) ; et
un système de refroidissement cryogénique (100) pour refroidir l'au moins un enroulement supraconducteur de l'ensemble rotor ;
**caractérisée en ce que** la machine rotative supraconductrice a une contrainte de cisaillement d'espace sensiblement dans la plage de 103 421 N/m² (15 psi) à 689 476 N/m² (100 psi),
**en ce que** l'au moins un ensemble à enroulement comprend en outre
au moins un élément de support interne (54) positionné entre des enroulements contigus de la pluralité d'enroulements supraconducteurs ;
le au moins un élément de support interne étant contigu à la large surface de la au moins une bobine de la pluralité de bobines supraconductrices, constituant un empilement de tôles qui va et vient entre un élément de support interne et une bobine supraconductrice,
et **en ce que**
la machine rotative supraconductrice possède une densité de couple sensiblement égale à 75 Nm/kg ou plus à sensiblement 500 tours par minute ou moins.

2. Machine rotative supraconductrice comprenant :
un ensemble stator (20) ayant
une bobine de stator (22) incluant au moins un enroulement conducteur ;
un ensemble rotor (50) configuré pour tourner à l'intérieur de l'ensemble stator et espacé de l'ensemble stator par un espace, l'ensemble rotor incluant :
au moins un ensemble à enroulement supraconducteur à haute température qui, en fonctionnement, produit un flux magnétique liant l'ensemble stator ; et
un système de refroidissement cryogénique (100) pour refroidir l'au moins un enroulement supraconducteur de l'ensemble rotor ;
**caractérisée en ce que** la machine rotative supraconductrice a une contrainte de cisaillement d'espace sensiblement dans la plage de 103 421 N/m² (15 psi) à 689 476 N/m² (100 psi),
**en ce que** l'ensemble stator comprend en outre :
un matériau d'isolation électrique (26) disposé autour de la bobine de stator ;
au moins un conduit de refroidissement (30) pour recevoir un liquide de refroidissement en provenance d'une source externe, le au moins un conduit de refroidissement étant disposé de manière adjacente à une première partie d'une surface externe de la bobine de stator ;
et
un élément de conduction thermique (32) disposé autour du au moins un conduit de refroidissement et d'une seconde partie de la surface externe de la bobine de stator pour transférer de la chaleur depuis la seconde partie vers le au moins un conduit de refroidissement, réduisant ainsi le gradient de température du matériau d'isolation électrique,
et **en ce que**
la machine rotative supraconductrice possède une densité de couple sensiblement égale à 75 Nm/kg ou plus à sensiblement 500 tours par minute ou moins.

3. Machine rotative supraconductrice selon la revendication 2, dans laquelle le au moins un ensemble à enroulement supraconducteur a un axe s'étendant d'une première extrémité à une seconde extrémité de l'ensemble à enroulement, l'ensemble à enroulement incluant une bobine supraconductrice (52) ayant un ruban supraconducteur enroulé autour et disposé le long d'un axe de l'ensemble à enroulement pour constituer une pluralité de tours concentriques définissant une ouverture, chaque tour du ruban supraconducteur ayant une large surface maintenue sensiblement parallèlement à l'axe de l'ensemble à enroulement.

4. Machine rotative supraconductrice selon la revendication 3, dans laquelle le ruban supraconducteur est enroulé en une forme d'hippodrome définissant une paire de sections d'extrémités opposées et incurvées et une paire de sections latérales opposées et sensiblement droites.

5. Machine rotative supraconductrice selon la revendication 3, dans laquelle le ruban supraconducteur inclut un supraconducteur composite à filaments multiples incluant des filaments supraconducteurs individuels qui composent la longueur du conducteur composite à filaments multiples et sont entourés d'un matériau formant matrice.

6. Machine rotative supraconductrice selon la revendication 3, dans laquelle le ruban supraconducteur inclut un supraconducteur anisotrope à haute température.

7. Machine rotative supraconductrice selon la revendication 6, dans laquelle le supraconducteur anisotrope à haute température est Bi2Sr2Ca2Cu3O.

8. Machine rotative supraconductrice selon la revendication 6, dans laquelle le supraconducteur anisotrope à haute température est un membre de la famille des oxydes de cuivre de terres rares.

9. Machine rotative supraconductrice selon la revendication 3, dans laquelle le au moins un ensemble à enroulement supraconducteur comprend en outre :
une pluralité de bobines supraconductrices (52) ; et
au moins un élément de support interne (54) positionné entre des enroulements contigus de la pluralité d'enroulements supraconducteurs ;
le au moins un élément de support interne étant contigu à la large surface de la au moins une bobine de la pluralité de bobines supraconductrices, constituant un empilement de tôles alternant entre un élément de support interne et une bobine supraconductrice.

10. Machine rotative supraconductrice selon la revendication 9, dans laquelle l'ensemble à enroulement supraconducteur comprend en outre une pluralité de bobines supraconductrices (52) et une pluralité d'éléments de support internes (54) dans laquelle un empilement de tôles est créé de façon à alternante entre une bobine supraconductrice et un élément de support interne.

11. Machine rotative supraconductrice selon la revendication 9, dans laquelle le au moins un élément de support interne est en acier inoxydable d'une épaisseur variant entre 0,002 cm (0,005 pouce) et 0,04 cm (0,1 pouce).

12. Machine rotative supraconductrice selon la revendication 1 ou 2, comprenant de plus une zone de vide autour de l'ensemble rotor.

13. Machine rotative supraconductrice selon la revendication 1 ou 2, comportant en outre :
un arbre (82) disposé à travers l'ensemble rotor le long de l'axe de l'ensemble rotor et espacé de l'ensemble rotor par un espace ; et
une pluralité d'ensembles de fixation tangentiels (70) ;
dans laquelle la pluralité d'ensembles de fixation tangentiels assemble l'ensemble rotor et l'arbre pour permettre à des forces de rotation d'être transférées entre l'ensemble rotor et l'arbre.

14. Machine rotative supraconductrice selon la revendication 13, dans laquelle les ensembles de fixation tangentiels comprennent en outre des bandes d'isolation thermique pour isoler de façon thermique l'ensemble rotor de l'arbre.

15. Machine rotative supraconductrice selon la revendication 14, dans laquelle les bandes d'isolation thermique sont faites d'un matériau incluant de l'époxy renforcé.

16. Machine rotative supraconductrice selon la revendication 13, comportant en outre :
une pluralité d'ensembles de fixation axiaux (60) dans laquelle la pluralité d'ensembles de fixation axiaux assemble l'ensemble rotor et l'arbre pour fixer l'ensemble rotor à l'arbre de manière axiale.

17. Machine rotative supraconductrice selon la revendication 16, dans laquelle les ensembles de fixation axiaux comprennent de plus des bandes d'isolation thermique (66) pour isoler de façon thermique l'ensemble rotor de l'arbre.

18. Machine rotative supraconductrice selon la revendication 17, dans laquelle les bandes d'isolation thermique sont des bandes de para-aramide/époxy.

19. Machine rotative supraconductrice selon la revendication 1, dans laquelle l'ensemble stator comprend une pluralité de bobines en forme de diamants (22).

20. Machine rotative supraconductrice selon la revendication 1 ou 2, dans laquelle l'ensemble stator comprend :
une bobine de stator (22) incluant au moins un enroulement conducteur ;
un matériau d'isolation électrique (26) disposé autour de la bobine de stator ;
au moins un conduit de refroidissement (30) pour recevoir un liquide de refroidissement en provenance d'une source externe, le au moins un conduit de refroidissement étant disposé de manière adjacente à une première partie d'une surface externe de la bobine de stator ;
et
un élément de conduction thermique (32) disposé autour du au moins un conduit de refroidissement et d'une seconde partie de la surface externe de la bobine de stator pour transférer de la chaleur depuis la seconde partie vers le au moins un conduit de refroidissement, réduisant ainsi le gradient de température du matériau d'isolation électrique.

21. Machine rotative supraconductrice selon la revendication 20, dans laquelle l'épaisseur du matériau d'isolation électrique (26) varie à chaque bobine de stator, l'épaisseur étant proportionnelle à une différence de tension au niveau de chaque bobine de stator dans l'ensemble stator, l'épaisseur maximale étant sur la bobine de stator supportant la tension du secteur.

22. Machine rotative supraconductrice selon la revendication 20, dans laquelle le au moins un conduit de refroidissement (30) comprend de plus une pluralité de passages traversants.

23. Machine rotative supraconductrice selon la revendication 1 ou 2, dans laquelle le système de refroidissement cryogénique comprend :
un cryostat incluant une surface refroidie cryogéniquement (102) et définissant un environnement cryogénique ; et
un dispositif de transport de fluide cryogénique (114) disposé dans l'environnement cryogénique,
le cryostat étant en communication de fluide avec une charge thermique distante et le dispositif de transport de fluide cryogénique déplaçant un fluide cryogénique entre le cryostat et la charge thermique distante et permettant à la surface refroidie cryogéniquement de retirer la chaleur contenue dans le fluide cryogénique recueilli au niveau de la charge thermique distante.

24. Machine rotative supraconductrice selon la revendication 23, comportant en outre :
une boucle de refroidissement fermée (118) en communication de fluide avec les surfaces refroidies cryogéniquement et en communication thermique avec la charge thermique distante.

25. Machine rotative supraconductrice selon la revendication 24, dans laquelle la charge thermique distante est l'ensemble rotor.

26. Machine rotative supraconductrice selon la revendication 25 comprenant en outre un accouplement rotatif (108), dans laquelle l'accouplement rotatif permet au cryostat de rester immobile pendant que la boucle de refroidissement fermée tourne avec l'ensemble rotor.

27. Machine rotative supraconductrice selon la revendication 23, dans laquelle le dispositif de transport de fluide cryogénique (114) ne nécessite pas de changement de phase dans le fluide cryogénique.

28. Machine rotative supraconductrice selon la revendication 27, dans laquelle le dispositif de transport de fluide cryogénique (114) est un ventilateur adaptable de manière cryogénique.

29. Machine rotative supraconductrice selon la revendication 23, dans laquelle la pluralité des surfaces refroidies cryogéniquement sont des couvercles froids.

30. Machine rotative supraconductrice selon la revendication 23, dans laquelle la pluralité des surfaces refroidies de manière cryogénique sont des couvercles froids de tube à pulsion.
